(19) Europäisches Patentamt
European Patent Office
Office européen des brevets

(11) **EP 1 423 661 B1**

(12) **EUROPÄISCHE PATENTSCHRIFT**

(45) Veröffentlichungstag und Bekanntmachung des Hinweises auf die Patenterteilung:
**19.05.2010 Patentblatt 2010/20**

(21) Anmeldenummer: **02758136.2**

(22) Anmeldetag: **08.08.2002**

(51) Int Cl.:
*G01C 21/26* [(2006.01)]    *G08G 1/0968* [(2006.01)]

(86) Internationale Anmeldenummer:
**PCT/DE2002/002918**

(87) Internationale Veröffentlichungsnummer:
**WO 2003/016823 (27.02.2003 Gazette 2003/09)**

(54) **VERFAHREN ZUM ERMITTELN VON ROUTEN UND DARAUF BEZOGENES NAVIGATIONSSYSTEM**

METHOD FOR DETERMINING ROUTES AND ASSOCIATED NAVIGATION SYSTEM

PROCEDE POUR DETERMINER DES ITINERAIRES ET SYSTEME DE NAVIGATION ASSOCIE

(84) Benannte Vertragsstaaten:
**DE FR GB IT**

(30) Priorität: **10.08.2001 DE 10139549**

(43) Veröffentlichungstag der Anmeldung:
**02.06.2004 Patentblatt 2004/23**

(73) Patentinhaber: **ROBERT BOSCH GMBH**
**70442 Stuttgart (DE)**

(72) Erfinder: **MUELLER, Guido**
**06484 Quedlinburg (DE)**

(56) Entgegenhaltungen:
**DE-A- 19 903 909    DE-A- 19 928 295**
**US-A- 4 984 168    US-B1- 6 230 099**

**Beschreibung**

**Technisches Gebiet**

Die vorliegende Erfindung betrifft ein Verfahren zum Ermitteln von Routen in einem als gerichtete Kanten und zwischen den gerichteten Kanten angeordnete Knoten in einer Speichereinheit abgebildeten Routennetz, insbesondere Straßennetz,

- wobei die zu ermittelnde Route als eine Abfolge oder Reihe von gerichteten Kanten mit jeweils zwischen den gerichteten Kanten angeordneten Knoten bestimmt wird und
- wobei jeder gerichteten Kante und/oder jedem Knoten ein bestimmter Widerstand zugeordnet wird.

Ein derartiges Verfahren ist beispielsweise in der Druckschrift EP 0 979 987 A2 oder DE 199 28 295 offenbart.
Die vorliegende Erfindung betrifft des weiteren ein auf ein derartiges Verfahren bezogenes Navigationssystem.

**Stand der Technik**

In heutzutage gebräuchlichen Navigationssystemen hat der Führer eines Fortbewegungsmittels, insbesondere eines Kraftfahrzeugs, die Möglichkeit, die Route des Fortbewegungsmittels auf verschiedene Weisen zu beeinflussen, so etwa

- durch Auswählen unterschiedlicher Optimierungskriterien, wie beispielsweise "kurze Route", "schnelle Route", "Meiden von Autobahnen" oder dergleichen, und/oder
- durch manuelles oder mittels Verkehrstelematik bestimmtes Beeinflussen von Routenabschnitten, die dann bei der Routenberechnung begünstigt bzw. umfahren werden, und/oder
- durch Definieren eines oder mehrerer Zwischenziele, die dann der Reihe nach angefahren werden, um abschließend zum Endziel zu führen.

In diesem Zusammenhang ist jedoch zu berücksichtigen, daß sich der Führer des Fortbewegungsmittels vor Beginn der Routensuche stets auf ein zwar beliebiges, aber festes Zwischenziel oder Ziel festzulegen hat; hierbei lassen sich die Zwischenziele bzw. Ziele im wesentlichen in die folgenden Kategorien einteilen:

- Straßenziel, das heißt das Ziel ist durch einen oder mehrere miteinander verbundene Straßenabschnitte gegeben;
- Kreuzungsziel, das heißt das Ziel ist durch einen Zielpunkt gegeben, der sich durch die Kreuzung von Straßen mit unterschiedlichen Namen ergibt;
- gerichtetes Punktziel oder ungerichtetes Punktziel, das heißt das Ziel ist durch einen Zielpunkt gegeben, der auf einen Lotpunkt auf einem naheliegenden Straßenabschnitt abgebildet wird.

Die vorgenannten verschiedenen Zieltypen haben jedoch gemeinsam, daß sämtliche Ziele räumlich auf ein in sich geschlossenes Gebiet bezogen sind.
Nun ist in diesem Zusammenhang jedoch zu berücksichtigen, daß in einigen Fällen seitens des Führers des Fortbewegungsmittels der Wunsch besteht, eine optimale Route zu irgendeinem von mehreren Zielen angeboten zu bekommen, was sich anhand der folgenden Beispiele verdeutlichen läßt:
So sucht ein Führer eines Fortbewegungsmittels in einer ihm fremden Stadt den nächstgelegenen Parkplatz; ein anderer Führer eines Fortbewegungsmittels benötigt etwa eine Route zur nächstgelegenen Tankstelle, denn der Tankinhalt tendiert gegen "Null"; in wieder einem anderen Fall wird einfach die Route zur nächstgelegenen Filiale einer Schnellimbißkette erwartet (weitere Beispiele lassen sich ohne weiteres finden).
Bei den derzeit am Markt angebotenen Navigationssystemen werden nun die verschiedenen, in Betracht kommenden Ziele mit einer kurzen Beschreibung in einem Index angezeigt. Der Benutzer des Navigationssystems hat nun die Möglichkeit, eines dieser Ziele aus dem Index auszuwählen und sich eine Route ermitteln zu lassen, wobei die Indexliste in einigen konventionellen Navigationssystemen neben der einfachen Beschreibung auch noch die zugehörige Luftlinienentfernung enthält und gemäß dieser Luftlinienentfernung sortiert ist.
In derartigen Fällen kann mithilfe des Kriterium der Luftlinienentfernung von der aktuellen Position sehr einfach das nächstgelegene Ziel festgestellt werden; jedoch lassen sich in der realen Topographie Beispiele finden, bei denen diese Ziele nur schlecht vom aktuellen Standpunkt des Fortbewegungsmittels aus zu erreichen sind bzw. es gleichwertige oder sogar bessere alternative Ziele gibt; somit bedeutet "nächst-" nicht notwendigerweise das am nächsten gelegene Ziel, sondern das am besten zu erreichende Ziel.
Hierbei läßt sich das optimal zu erreichende Ziel mit sich zur Zeit auf dem Markt befindlichen Navigationssystemen nur durch das nacheinander erfolgende Berechnen der Routen zu sämtlichen im Index abgebotenen Zielen und durch Vergleichen derselben ermitteln; dies stellt selbst dann, wenn lediglich die nächsten drei Ziele entsprechend der jeweiligen Luftlinienentfernung berücksichtigt würden, einen zeitraubenden und nicht handhabbaren Prozeß dar.

Nachdem sich der Benutzer des Navigationssystems für ein Ziel entschieden hat, wird also an diesem Ziel festgehalten. Ist es nicht möglich, der vorgeschlagenen Route zum gewählten Ziel zu folgen - sei es durch einfaches Abweichen von der Route und/oder infolge Straßensperrungen -, so wird weiter am alten Ziel festgehahen, obwohl es ein besseres Ziel gibt. Auf diese Weise ist es denkbar, daß die Route etwa zur gewählten Tankstelle an einer anderen möglichen Tankstelle, die beim Start der Zielführung ein wenig ungünstiger erschien, unmittelbar vorbeiführt.

Um nun ein Verfahren der eingangs genannten Art zu realisieren, wird im Regelfall ein Routennetz, insbesondere ein Straßennetz, durch eine digitale Karte abgebildet. Für das Beispiel des hier vorgestellten Verfahrens wird der Routensuch-Algorithmus nach Ford und Moore verwendet, wobei für diesen Algorithmus und für das vorgestellte Beispiel von folgenden Kriterien zur Abbildung des Routennetzes ausgegangen wird:

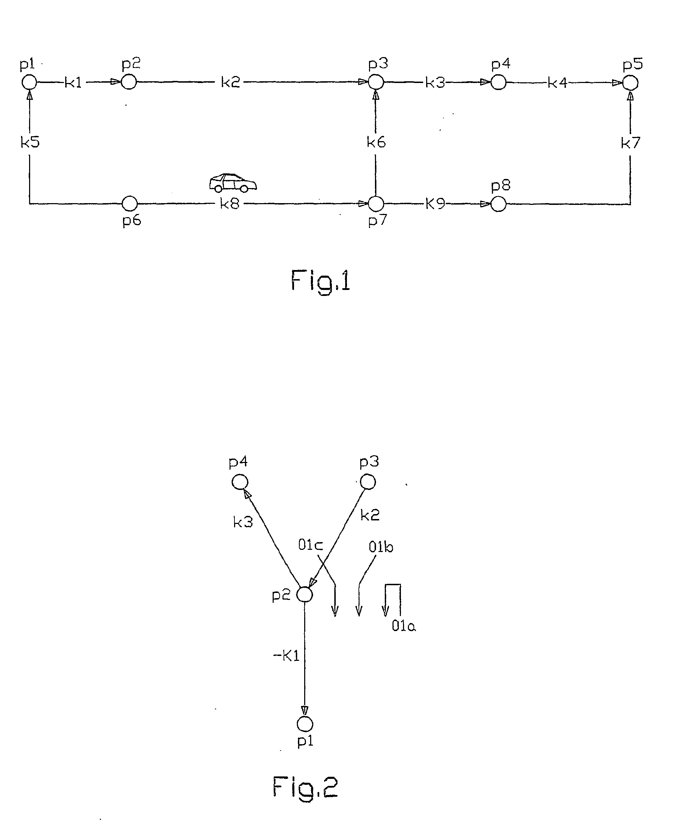

Ein Routennetz, insbesondere ein Straßennetz, kann für die mathematische Bearbeitung durch einen Routensuch-Algorithmus als Graph mit Kanten und mit Knoten dargestellt werden. Hierbei repräsentieren die Kanten die Routen und die Knoten die Vermaschungspunkte des Routennetzes. Da im realen Straßennetz der Verkehrsfluß gerichtet ist, muß auch eine Kante als gerichteter Vektor beschrieben werden (vgl. Figur 1: Beispielnetz, das heißt exemplarisches Routennetz, insbesondere reales Straßennetz, als ein Netzwerk von gerichteten Kanten und von zwischen den gerichteten Kanten angeordneten Knoten).

Den Kanten werden (Fahr-)Widerstände, die sogenannten Streckenwiderstände, zugeordnet, wobei der Streckenwiderstand eine Meßgröße für den Aufwand darstellt, von einem Knoten im Netz zu einem anderen Knoten im Netz zu gelangen. Im einfachsten Falle kann als Streckenwiderstand direkt die Kantenlänge verwendet werden; alternativ kann auch - unter Annahme einer mittleren Verkehrsgeschwindigkeit die Fahrzeit auf einer Kante als deren Streckenwiderstand betrachtet werden; es sind aber auch Konstellationen denkbar, bei denen Fahrzeit, Länge und andere Größen miteinander verknüpft werden, um den Streckenwiderstand einer Kante im Graphen zu betrachten.

Ergänzend sei an dieser Stelle angemerkt, daß auch den Knoten ein Widerstand (--> Strecke / Manöver / Bestrafung) zugeordnet werden kann, wobei jedoch dieser Knotenwiderstand für das Verfahren gemäß der vorliegenden Erfindung nicht von Bedeutung sein soll und somit im folgenden nicht weiter betrachtet werden soll.

Nun bestimmen alle Bestwege-Algorithmen letztlich eine Route zwischen einer Startkante und einer Zielkante im gerichteten Graphen mit der Eigenschaft, daß die Summe aller ihrer den Kanten zugeordneten Streckenwiderstände ein Minimum aufweist. Als Standardalgorithmus zur Routenberechnung ist hierbei ein Verfahren im Serieneinsatz, das sich auf bekannte Bestwege-Algorithmen nach Ford und Moore aus der Graphentheorie stützt; hierbei werden diese Algorithmen auf die besonderen Anforderungen für den Einsatz in autarken Fahrzeugnavigationssystemen angepaßt.

Der Algorithmus nach Ford und Moore ist rückwärtsiterierend, "besucht" alle Kanten im Graphen und bewertet die Kanten in bezug auf den günstigsten Widerstand zur Zielkante. Dies bedeutet mit anderen Worten, daß ausgehend von einer Zielkante in jedem Iterationsschritt der widerstandsmäßig günstigste Weg zu den in einer Liste aufgeführten, im vorherigen Iterationsschritt optimierten Kanten gesucht wird. Als Ergebnis liefert das Verfahren von jeder Kante im Graphen die optimale Route zur Zielkante.

Zum Darstellen der Berechnungsergebnisse wird eine sogenannte Routentabelle in der Speichereinheit angelegt, die für das Beispielnetz gemäß Figur 1 wie folgt aussehen würde:

| Kante | +Widerstand | +Nachfolger | -Widerstand | -Nachfolger |
|-------|-------------|-------------|-------------|-------------|
| k1 | ∞ | - | ∞ | - |
| k2 | ∞ | - | ∞ | - |
| k3 | ∞ | - | ∞ | - |
| k4 | ∞ | - | ∞ | - |
| k5 | ∞ | - | ∞ | - |
| k6 | ∞ | - | ∞ | - |
| k7 | ∞ | - | ∞ | - |
| k8 | ∞ | - | ∞ | - |
| k9 | ∞ | - | ∞ | - |

Für jede Kante k1 bis k9 im Graphen wird in dieser Tabelle der Widerstand bis zur Zielkante und die in Zielrichtung folgende Nachfolgerkante (= "Nachfolger") angegeben. Als Initialisierungswert wird der Widerstand auf "unendlich" (∞) und die Nachfolgerkante auf "undefiniert" (-) gesetzt, das heißt der Nachfolger gelöscht; ein positives Vorzeichen ("+") in der Widerstands- und Nachfolgerspalte steht für die Betrachtung der Kante in ihrer Pfeilrichtung, ein negatives Vorzeichen ("-") für die Betrachtung der Kante entgegen ihrer Pfeilrichtung.

Vor dem Starten der iterativen Optimierung wird die Zielkante in vorstehender Routentabelle mit dem Widerstand "Null" initialisiert; des weiteren ist die Zielkante in die Liste der bereits optimierten Kanten, nachfolgend als "erste Liste" bezeichnet, einzutragen. Eine "zweite Liste" wird zum Speichern der im nächsten Optimierungsschritt zu prüfenden Kanten benötigt; die zweite Liste ist zu Beginn der iterativen Optimierung len.

Nach der Initialisierung kann das Optimierungsverfahren starten. Die in der ersten Liste aufgeführten Kanten werden als fiktive Ist-Position des Fortbewegungsmittels betrachtet, und alle mit dieser Istkante vermaschten Kanten, die sogenannten "Ankommerkanten", werden einer Optimierungsprüfung (nachfolgend durch ein O bezeichnet) unterzogen. Hierbei ergibt sich die grundlegende Situation gemäß Figur 2.

Für die Optimierung wird nun angenommen, daß sich das Fortbewegungsmittel auf einer der Ankommerkanten mit Fahrtrichtung zur Istkante befindet. Als Optimierungsbedingung wird dann geprüft, ob die alte vorhandene Route von der Ankommerkante schlechter als die neue Route unter Benutzung der Istkante ist; wenn sich die Route über die Istkante als besser herausstellt, so wird optimiert. Entsprechend den in Figur 2 dargestellten Konstellation ergeben sich die folgenden Optimierungsbeziehungen:

| Optimierung | Istkante | Ankommerkante |
|---|---|---|
| O1a | +k1 | -k1 |
| O1b | +k1 | +k2 |
| O1c | +k1 | -k3 |

Für jede Istkante-Ankommerkante-Beziehung gemäß der vorstehenden Übersicht erfolgt die Opiimierungsprüfung, die am Beispiel der Ankommerkante +k2 (--> Optimierung O1b; vgl. Figur 2) dargestellt wird. In der Optimierungsprüfung wird der alte Routentabellenwiderstand der Ankommerkante +k2 zum Ziel mit dem Widerstand verglichen, den die Ankommerkante haben würde, wenn sie über die Istkante zum Ziel führen würde.

Eine Optimierung erfolgt dann, wenn die sogenannte (Widerstands)Optimierungsbedingung

$$R_{RT,Ist(+k1)} + R_{Kante,Ank(+k2)} < R_{RT(Alt),Ank(+k2)}$$

erfüllt ist,

wobei $R_{RT,Ist(+k1)}$ = Widerstand (aus Routentabelle RT) der Istkante +k1 zum Ziel;
$R_{Kante,Ank(+k2)}$ = Kantenwiderstand der Ankommerkante +k2;
$R_{RT(Alt),Ank(+k2)}$ = Widerstand (aus Routentabelle RT) der Ankommerkante +k2 zum Ziel.

Die vorgenannte Optimierungsbedingung bedeutet also mit anderen Worten, daß der neue Widerstand der Ankommerkante kleiner als der alte Widerstand der Ankommerkante ist. Der Widerstand der Ankommerkante wird in der Routentabelle dann durch den neuen, kleineren Wert ersetzt, als Nachfolgerkante wird die Istkante eingetragen, und die optimierte Ankommerkante wird in die zweite Liste aufgenommen.

Sind auf diese Weise alle Kanten aus der ersten Liste bearbeitet worden, so werden die erste Liste und die zweite Liste vertauscht, das heißt Ausgangspunkt für die nächsten Optimierungen sind die im letzten Verfahrensschritt optimierten Kanten. Das Verfahren wird beendet, wenn die erste Liste leer aufgefunden wird, das heißt wenn es keine im vorherigen Durchlauf optimierten Kanten mehr gibt.

Nachdem vorstehend auf den Routensuch-Algorithmus nach Ford und Moore eingegangen wurde, soll nun das für die vorliegende Erfindung maßgebliche Problem einer suboptimalen Route zum nächsten Ziel anhand eines Beispiels verdeutlicht werden:

In Figur 1 ist das zu betrachtende Beispielnetz dargestellt. Es wird davon ausgegangen, daß die Kanten k1, k3, k4, k6 sowie k9 jeweils den Widerstandswert 10 und die Kanten k2, k5, k7 sowie k8 jeweils den Widerstandswert 20 aufweisen. Das Fortbewegungsmittel befindet sich zum Betrachtungszeitpunkt auf der Kante +k8, das heißt die Fahrtrichtung entspricht der Vorzugsrichtung.

Der Führer des Fortbewegungsmittels möchte nun von seiner aktuellen Position aus die optimale Route zu einem Ziel aus einer bestimmten Kategorie berechnet haben (dies könnten beispielsweise das nächstbeste Postamt oder die nächstbeste Tankstelle sein, wenn die Tankreserve aktiviert ist). Dazu ruft der Führer des Fortbewegungsmittels den Index der entsprechenden Kategorie (Postämter, Tankstellen, ...) auf und erhält die folgende Liste der sich um die aktuelle Position des Fortbewegungsmittels befindlichen Ziele einer bestimmten Kategorie:

> 20 Ziel A

30 Ziel B

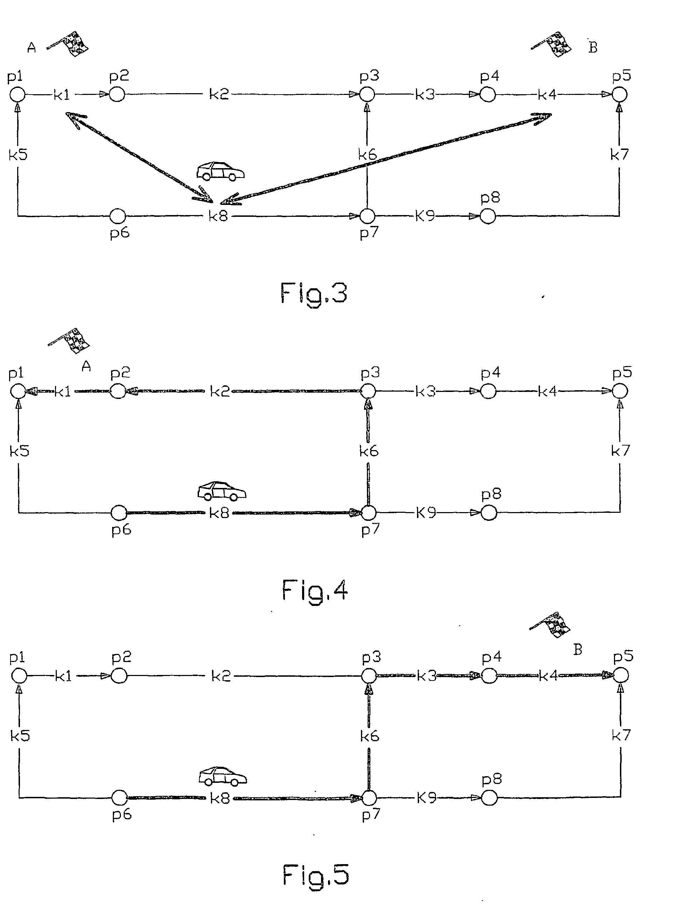

Anhand dieser Liste läßt sich jedoch keine Aussage darüber treffen, zu welchem der beiden Ziele - Ziel A oder Ziel B - sich die bessere Route ergibt; dabei hilft auch die in der Indexliste enthaltene Luftlinienentfernung zwischen der aktuellen Position des Fortbewegungsmittels und den einzelnen Zielen nicht. Im Beispielnetz (vgl. Figur 1) wird das Ziel A auf die Kante k1 und das Ziel B auf die Kante k4 abgebildet, wie aus Figur 3 anhand jeweils eines Doppelpfeils hervorgeht.

Auf Basis der vorstehenden Liste würde die Präferenz auf dem der aktuellen Position des Fortbewegungsmittels näheren Ziel A liegen. Für dieses Ziel A ergibt sich bei Anwendung des Bestwege-Algorithmus nach Ford und Moore sowie bei Anwendung der entsprechenden Optimierungsbedingung bezüglich des Widerstands die in Figur 4 dargestellte, durch die Pfeilrichtung markierte Route zum Ziel A, wobei der Gesamtwiderstand der Route zum Ziel A gerade 50 beträgt.

Bei der Bestimmung der Route zum von der aktuellen Position des Fortbewegungsmittels weiter entfernten Ziel B wird die eigentliche Problematik deutlich, denn für dieses Ziel B ergibt sich die in Figur 5 dargestellte, durch die Pfeilrichtung markierte Route mit einem Gesamtwiderstand von 40.

Beim Vergleichen der beiden Routen zum Ziel A und zum Ziel B wird deutlich, daß die Route zum nächstgelegenen Ziel A nicht die optimale Route hervorbringt; diese optimale Route ergibt sich in diesem Beispiel erst mit dem zweitnächsten Ziel B. Insbesondere problematisch ist in diesem Zusammenhang, daß sich die Frage, welches Ziel die optimale Route hervorbringt, mit den konventionellen Verfahren nur durch sukzessives Berechnen der Routen zu sämtlichen Zielen bestimmen läßt.

Darstellung der Erfindung: Aufgabe, Lösung, Vorteile

Ausgehend von den vorgenannten Nachteilen und Unzulänglichkeiten liegt der vorliegenden Erfindung die Aufgabe zugrunde, ein Verfahren der eingangs genannten Art sowie ein auf ein derartiges Verfahren bezogenes Navigationssystem so weiterzubilden, daß der Nutzer einer Navigation nicht nur die Möglichkeit hat, eine Route von einem Startpunkt zu einem einzigen Zielpunkt zu berechnen, sondern vielmehr eine optimale Route zu einem Ziel einer bestimmten Kategorie bestimmen kann.

Diese Aufgabe wird gemäß der Lehre der vorliegenden Erfindung durch ein Verfahren mit den im Anspruch 1 genannten Merkmalen sowie durch ein Navigationssystem mit den im Anspruch 14 genannten Merkmalen gelöst. Vorteilhafte Ausgestaltungen und zweckmäßige Weiterbildungen der vorliegenden Erfindung sind in den jeweiligen Unteransprüchen gekennzeichnet.

Hierbei wird der Fachmann auf dem Gebiet der Verkehrstelematik insbesondere zu schätzen wissen, daß gemäß der Lehre der vorliegenden Erfindung kein sequentielles Bestimmen der Routen zu den verschiedenen Möglichkeiten, sondern vielmehr im Rahmen einer sogenannten "MultiDestination-RoutenSuche" (abgekürzt "MultiDest-RS") das gleichzeitige Berücksichtigen sämtlicher in Frage kommender Ziele erfolgt, so daß die optimale Route zum besten Ziel als Ergebnis ermittelt wird.

In diesem Zusammenhang werden die bei der sogenannten "MultiDestination-RoutenSuche" zu berücksichtigenden Ziele als im wesentlichen gleichberechtigt angenommen. Bei diesen Zielen kann es sich um die verschiedenen Einträge des Index einer bestimmten Kategorie von Sonderzielen, wie etwa Postämter, Tankstellen oder dergleichen, handeln; alternativ oder in Ergänzung hierzu ist jedoch auch möglich, verschiedene Ziele, die nicht aus einer bestimmten Indexkategorie entstammen, für die sogenannte "MultiDestination-RoutenSuche" zu benutzen; so können beispielsweise Adressen, Kartenziele oder Einträge aus mindestens einem Zielspeicher verwendet werden.

Gemäß einem erfindungswesentlichen Merkmal können bei der sogenannten "MultiDestination-RoutenSuche" mehrere, räumlich nicht zusammenhängende Ziele gleichberechtigt für die Routensuche verwendet werden. Der Führer des Fortbewegungsmittels muß sich in diesem Zusammenhang keine Gedanken machen, welches der Ziele am besten zu erreichen ist, denn die Routenermittlung von der aktuellen Ist-Position zu den Zielen erfolgt so, daß unter Berücksichtigung der gewählten Kriterien, wie etwa "kurze Route", "schnelle Route" oder dergleichen, die optimale Route ermittelt wird.

Nach Ermittlung der optimalen Route zu einem der Ziele hat der Führer des Fortbewegungsmittels die Wahl,

- am benutzten Ziel festzuhalten, es zu fixieren bzw. die anderen möglichen Ziele zu verwerfen;
- das aktuelle Ziel selbst zu verwerfen und zu einem der anderen Ziele eine Route zu bestimmen; oder
- sämtliche Ziele als aktiv zu belassen, so daß sich beim Abweichen von der vorgeschlagenen Route zu einem anderen Ziel eine bessere Route ergibt.

Neben den vorstehend dargelegten gewählten Kriterien können bei der Ermittlung der Route gemäß der vorliegenden Erfindung auch Netzbeeinflussungen durch Telematik oder durch benutzerdefinierte Manipulationen, wie etwa sogenannte "Stau voraus"-Sperrungen, berücksichtigt werden.

In bevorzugter Weise sind für die sogenannte "MultiDestination-RoutenSuche" neben den Anpassungen in der Routensuche selbst auch Erweiterungen in der Schnittstelleneinheit der Recheneinheit des Navigationssystems gemäß der vorliegenden Erfindung und/oder im Index zur Definition der gleichberechtigten, zu verwendenden Ziele vorgesehen. Hierbei sind neben den für eine normale Routensuche erforderlichen Informationen über die Startposition, die der Routensuche üblicherweise mithilfe der Ortungseinheit des Navigationssystems bekannt ist, bei der sogenannten "MultiDestination-RoutenSuche" ("MultiDest-RS") in zweckmäßiger Weise die verschiedenen gleichberechtigten Ziele zu spezifizieren.

Unabhängig hiervon oder in Verbindung hiermit kann das Navigationssystem gemäß einer besonders erfinderischen Weiterbildung für benutzerdefiniertes manuelles Eingeben, insbesondere für benutzerdefiniertes manuelles Definieren, im speziellen für benutzerdefiniertes manuelles Spezifizieren, und/oder für automatisches Eingeben, insbesondere für automatisches Definieren, im speziellen für automatisches Spezifizieren, ausgelegt werden, wobei das automatische Eingeben unter anderem auch auf dem automatischen Feststellen der aktuellen Position des Fortbewegungsmittels beruhen kann.

Beispielhaft kann etwa mit dem angesichts der aktuellen Tankfüllung noch verfügbaren Restweg gearbeitet werden, so daß dann im Rahmen der sogenannten "MultiDestination-R(outen)S(uche)" eine oder mehrere mögliche Routen vom Ausgangspunkt (zum Beispiel die aktuelle Position des Fortbewegungsmittels) zu einer Mehr- oder Vielzahl von gleichberechtigten, räumlich getrennten Zielpunkten (zum Beispiel die mit der aktuellen Tankfüllung noch erreichbaren Tankstellen) berechnet werden können.

In diesem Zusammenhang kann mithin die eigentliche sogenannte "MultiDestination-R(outen)S(uche)" nach dem nachstehend beschriebenen Definieren (seines manuell, das heißt durch den Benutzer des Fortbewegungsmittels, und/oder sei es automatisch) einer sogenannten "MultiDestination-Liste" (nachstehend "MultiDest-Liste" genannt) erfolgen:

Die auch als sogenannte "Subdestinationen" (abgekürzt SD) bezeichneten Teilziele der sogenannten "MultiDestination-RoutenSuche" können beispielsweise Ziele aus dem Zielspeicher, Adressen, Standort- oder Punktziele sein. Bei dieser Art von Zielen ruft der Nutzer die verschiedenen Ziele auf und speichert diese, anstatt die Routenberechnung zu beginnen, in der sogenannten "MultiDest-Liste" manuell über einen Menüpunkt ab.

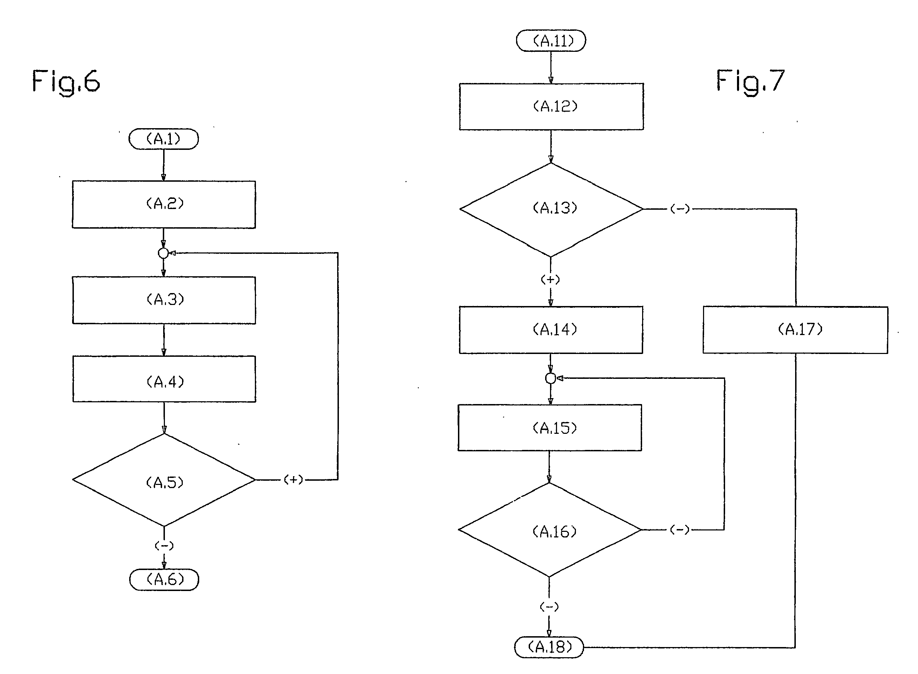

Gemäß einer bevorzugten Ausgestaltung weist der Vorgang des Erzeugens der sogenannten "MultiDest-Liste" aus den einzelnen Zielen die folgenden Verfahrensschritte auf (vgl. Figur 6):

(A.1) Starten;
(A.2) Initialisieren der sogenannten "MultiDest-Liste";
(A.3) Auswählen eines bestimmten Ziels, wie etwa Adresse, Kartenziel, Zielspeichereintrag oder dergleichen;
(A.4) Kopieren der Beschreibung dieses Ziels in die sogenannte "MultiDest-Liste" (im Graphen);
(A.5) Hinzufügen mindestens eines weiteren Ziels:

- wenn mindestens ein weiteres Ziel hinzugefügt (+), dann Gehen vor Schritt (A.3);
- wenn kein weiteres Ziel hinzugefügt (-), dann Gehen zu Schritt (A.6);

(A.6) Beenden des Verfahrens.

Eine alternative oder ergänzende Möglichkeit kann darin bestehen, die sogenannte "MultiDest-Liste" mit den Einträgen der Liste von Sonderzielen der gewünschten Kategorie (Postämter, Tankstellen oder ähnliches) um die Ist-Position des Fortbewegungsmittels zu füllen; hierbei ist die Anzahl von Einträgen der sogenannten "MultiDest-Liste" nur durch die Endlichkeit des Arbeitsspechers des Navigationssystems begrenzt. In diesem Falle wählt der Nutzer nicht ein bestimmtes Ziel aus der Liste aus, sondern definiert sämtliche Einträge als Teilziele; es ist jedoch auch möglich, einzelne Einträge der Liste einer sogenannten "MultiDest-Liste" hinzuzufügen.

Gemäß einer bevorzugten Ausgestaltung weist der Vorgang des Erzeugens der sogenannten "MultiDest-Liste" aus einer Sonderzielliste die folgenden Verfahrensschritte auf (vgl. Figur 7):

(A.11) Starten;
(A.12) Auswählen der Kategorie, insbesondere der Sonderzielkategorie;
(A.13) Übernehmen der Liste als sogenannte "MuttiDest-Liste":

- wenn Liste als sogenannte "MultiDest-Liste" übernommen (+), dann Gehen zu Schritt (A.14):

Initialisieren der sogenannten "MultiDest-Liste";

- wenn Liste nicht als sog. "MultiDest-Liste" übernommen (-), dann Gehen zu Schritt (A.17):

Auswählen eines bestimmten Ziels;

(A.15) Kopieren der Zielbeschreibung in die sogenannte "MultiDest-Liste" (im Graphen);

(A.16) Abarbeiten sämtlicher Ziele oder einer bestimmten Anzahl von Zielen:

- wenn sämtliche Ziele oder die bestimmte Anzahl von Zielen abgearbeitet (+), dann Gehen zu Schritt (A.18);
- wenn noch nicht sämtliche Ziele oder noch nicht die bestimmte Anzahl von Zielen abgearbeitet (-), dann Gehen vor Schritt (A.15);

(A.18) Beenden des Verfahrens.

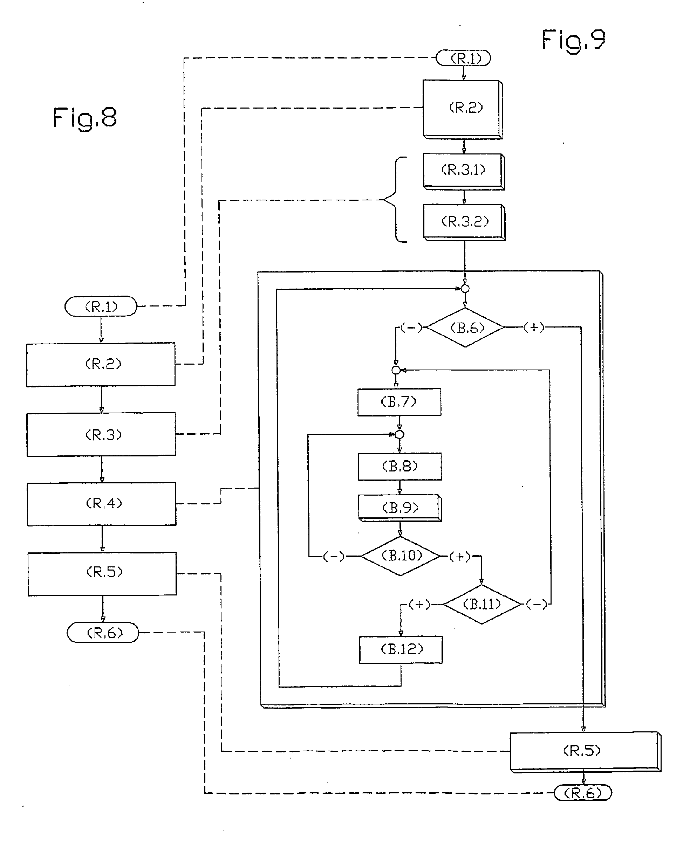

Nachdem auf diese Weise sämtliche Teilziele definiert sind, kann die nachfolgend beschriebene sogenannte "MultiDestination-RoutenSuche" mit den gewünschten Kriterien gestartet werden. Hierbei läßt sich der allgemeine Ablauf der sogenannten "NiultiDestination-RoutenSuche" bei Heranziehung des Routensuch-Algorithmus nach Ford und Moore in zweckmäßiger Weise im wesentlichen in die folgenden Abschnitte untergliedern (vgl. Figur 8 und detaillierter Figur 9):

(R.1) Starten;

(R.2) Bestimmen des sogenannten "MultiDest":

Definieren der beiden Teilziele A und B;

(R.3) Initialisieren:

(R.3.1) Initialisieren der Routentabelle: Zunächst erfolgt die Grundinitialisierung der Routentabelle; hierbei wird der Widerstand auf unendlich ($\infty$) gesetzt und der Nachfolger gelöscht (-);
(R.3.2) Initialisieren der in der sogenannten "MultiDest-Liste" beschriebenen Kanten der Teilziele: Nach der Grundinitialisierung der Routentabelle müssen sämtliche Kanten der zu berücksichtigenden Teilziele in der Routentabelle als Ziel initialisiert werden; hierzu wird in der Routentabelle der Widerstand zu "Null" und der Nachfolger auf den Initialisierungswert (kein Nachfolger: "-") der in einer sogenannten "MultiDest-Beschreibungsliste" eingetragenen Kanten gesetzt; ferner werden die bearbeiteten Kanten in die zweite Liste, das heißt in die Liste der noch zu optimierenden Kanten aufgenommen.

(R.4) Optimieren der Kanten des Graphen:

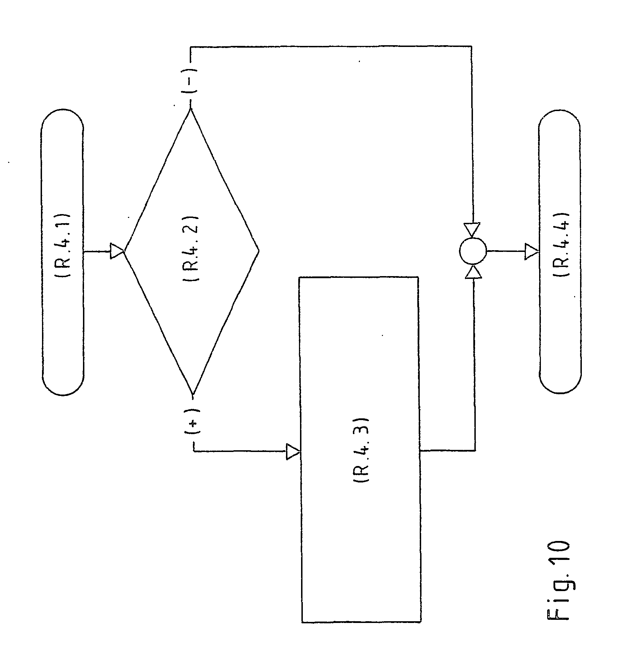

Nach dem Initialisieren der Routentabelle und der sogenannten "MultiDest-Beschreibungsliste" erfolgt die eigentliche Routensuche; anhand der nachfolgend dargestellten Optimierungsbedingungen bzw. -regeln wird die Optimierung der Route durchgeführt, wie aus Figur 10 hervorgeht:

(R.4.1) Start der Kantenoptimierung;
(R.4.2) Bestimmen, Ob $R_{RT(Neu),Ank} < R_{RT(Alt),Ank}$, wobei

$$R_{RT(Neu),Ank} = R_{Kante,Ank} + R_{RT,Ist}:$$

- wenn Bedingung $R_{RT(Neu),Ank} < R_{RT(Alt),Ank}$ erfüllt (+), dann Gehen zu Schritt (R.4.3):

  Aktualisieren des Eintrags in der Routentabelle:
  Aktualisieren des Widerstandswerts der Ankommerkante in der Routentabelle und Eintragen der istkante als Nachfolger;

- wenn Bedingung $R_{RT(Neu),Ank} < R_{RT(Alt),Ank}$ nicht erfüllt(-), dann Gehen zu Schritt (R.4.4):
  Beenden der Kantenoptimierung.

Die hinreichende Bedingung für die Optimierung wird durch die Formel $R_{Kante,Ank} + R_{RT,Ist} < R_{RT(Alt),Ank}$ dargestellt, das heißt die Kante muß optimiert werden, wenn die Summe aus dem Streckenwiderstand der Ankommerkante und dem in der Routentabelle eingetragenen Widerstand der Istkante kleiner als der alte, in der Routentabelle eingetragene Widerstand der Ankommerkante ist. Mit dem Erfüllen dieser Bedingung ergibt sich die Notwendigkeit einer Optimierung; es werden die neuen Eigenschaften der Ankommerkante in die Routentabelle und als Nachfolger die Istkante eingetragen. Sind alle Kanten aus der zum Speichern der bereits optimieren Kanten eingesetzten ersten Liste in der beschriebenen Weise bearbeitet, so werden die erste Liste der bereits optimierten Kanten und eine zweite, zum Speichern der im nächsten Optimierungsschritt zu prüfenden Kanten benötigte Liste vertauscht, das heißt Ausgangspunkt für die nächsten Optimierungen sind die im letzten Verfahrensschritt optimierten Kanten. Das Verfahren terminiert, wenn die erste Liste leer aufgefunden wird.

(R.5) Zusammenstellen der Routenliste:

Nach dem vollständigen Optimieren wird die Routenliste aus der Routentabelle erzeugt. Ausgehend von der Kante der aktuellen Position des Fortbewegungsmittels werden die Kanten entsprechend der Nachfolgerverkettung in der Routentabelle in die Routenliste geschrieben. Mittels der letzten Kante in dieser Routenliste läßt sich über die sogenannte "MultiDest-Beschreibungsliste" das aktuelle Teilziel bestimmen und in einer sogenannten "MultiDest-Indexliste" für eine eventuelle Fixierung kennzeichnen.

(R.6) Beenden des Verfahrens.

Gemäß einer bevorzugten Ausführungsform der vorliegenden Erfindung gelangt bei der sogenannten "Multi-Destination-RoutenSuche" - basierend auf dem Bestwege-Algorithmus nach Ford und Moore - zum Beschreiben der Eigenschaften der Kanten des Graphen mindestens eine Routentabelle zum Einsatz. Eine derartige Routentabelle enthält die Beschreibung der Eigenschaften sämtlicher Kanten des Routennetzes bezüglich eines Abschnitts der Route zum Ziel; jede Kante wird durch einen Eintrag abgebildet, der die Eigenschaften der Kante sowohl in Pfeilrichtung als auch entgegen der Pfeilrichtung enthält.

Bei der sogenannten "MultiDestination-RoutenSuche" wird die optimale Route zum bestmöglichen Ziel in einer einzigen Routentabelle beschrieben, wobei der Aufbau einer grundinitialisierten Routentabelle in zweckmäßiger Weise wie folgt ist:

| Kante | +Widerstand | +Nachfolger | -Widerstand | -Nachfolger |
|-------|-------------|-------------|-------------|-------------|
| k1 | $\infty$ | - | $\infty$ | - |
| k2 | $\infty$ | - | $\infty$ | - |
| k3 | $\infty$ | - | $\infty$ | - |
| ... | $\infty$ | - | $\infty$ | - |
| k(M-1) | $\infty$ | - | $\infty$ | - |
| kM | $\infty$ | - | $\infty$ | - |

Gemäß einer bevorzugten Ausführungsform der vorliegenden Erfindung erfolgt die Beschreibung der Teilziele und der Verknüpfung mit den zugehörigen Kanten im Graphen mittels der miteinander verknüpften sogenannten "MultiDest-Indexliste" und der sogenannten "MultiDest-Beschreibungsliste", zusammengefaßt auch als sogenannte "MultiDest-Liste" bezeichnet.

Hierbei sind in der sogenannten "MultiDest-Indexliste" sämtliche Teilziele enthalten. Diese sogenannte "MultiDest-Indexliste" enthält keinerlei Sortierung und dient lediglich dazu, einen einfachen Zugriff auf die Liste der das Teilziele beschreibenden Kanten zu ermöglichen, wie aus dem nachfolgend dargestellten exemplarischen Aufbau der sogenannten "MultiDest-Indexliste" hervorgeht:

| MultiDest-Index | Status / Beschreibung |
|-----------------|----------------------|
| | 1 / name des Teilziels |
| 2 | / Name des Teilziels |
| 3 | / Name des Teilziels |
| ... | / Name des Teilziels |
| N-1 | / Name des Teilziels |
| N | / Name des Teilziels |

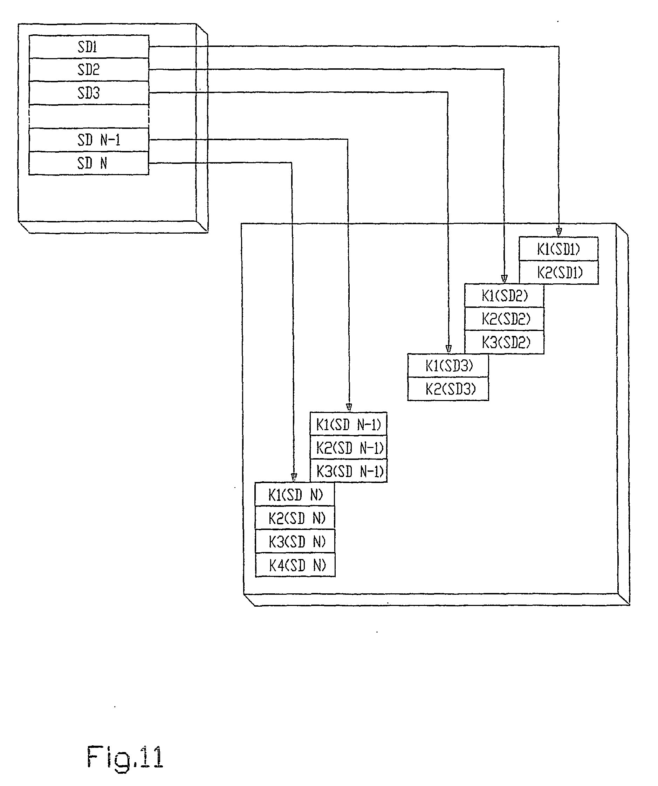

Für jedes Teilziel (= sogenannte Subdestination SD) wird in der in Figur 11 links oben abgebildeten sogenannten "MultiDest-Indexliste" ein Verweis auf die Liste der zur jeweiligen Subdestination SD gehörenden Kanten K (--> in Figur 11 rechts unten abgebildete sogenannte "MultiDest-Beschreibungsliste") gespeichert; Figur 11 veranschaulicht mithin den Zusammenhang zwischen der sogenannten "MultiDest-Indexliste" und der sogenannten "MultiDest-Beschreibungsliste".

Wenn die vorliegende Erfindung in zweckmäßiger Weise weitergebildet werden soll, so wird zum Speichern der bereits optimierten Kanten eine erste Liste der bereits optimierten Kanten eingesetzt. Eine zweite Liste wird zum Speichern der im nächsten Optimierungsschritt zu prüfenden Kanten benötigt und enthält demzufolge zweckmäßigerweise die im nächsten Optimierungsschritt zu prüfenden Kanten; die zweite Liste ist zu Beginn der iterativen Optimierung leer. Hierbei ergeben sich die im nächsten Optimierungsschritt zu prüfenden Kanten im Wege der bereits diskutierten Optimierungsbeziehungen, wobei von einer Istkante aus wieder sämtliche Ankommerkanten überprüft werden (vgl. Figur 2).

Zusammenfassend läßt sich feststellen, daß es durch die vorliegende Erfindung möglich ist, die optimale Route von einer Ist-Position zu einem von mehreren gleichberechtigten, nicht zusammenhängenden Zielen zu ermitteln. Hierbei erfolgt keine sequentielle Bestimmung zu den einzelnen möglichen Zielen; vielmehr wird die Route im Rahmen des sogenannten "MultiDestination-RoutenSuch"-Verfahrens unter Berücksichtigung sämtliche in Frage kommender Ziele als optimale Route ermittelt.

Hiermit ergibt sich unter anderem der Vorteil, daß der Führer des Foribewegungsmittels mittels der optimalen Routenführung zum besten Zielpunkt gelangt, das heißt daß ungünstige Routenführungen, wie sie bei der ausschließlichen Wahl des nächstgelegenen Ziels auftreten können, vermieden werden, denn es finden sämtliche Ziele Berücksichtigung.

Des weiteren wird der Fachmann in bezug auf die vorliegende Erfindung anerkennen, daß diese nicht auf den Einsatz eines bestimmten Routensuch-Algorithmus beschränkt ist; zwar ist der vorstehend exemplifizierte Routensuch-Algorithmus nach Ford und Moore für die vorliegende Erfindung ausgesprochen geeignet, jedoch läßt sich das Verfahren auch mit anderen mathematisch exakten Verfahren zum Ermitteln des "besten Weges" aus der Graphentheorie realisieren.

Wie bereits vorstehend erläutert, werden beim vorgestellten Verfahren sämtliche Ziele gleichzeitig berücksichtigt, so daß die Bestimmung der optimalen Route zum besten Ziel mit einem Mal erfolgt, was wiederum eine schnellere Berechnung der Route als bei der sequentiellen Ermittlung nach sich zieht. In diesem Zusammenhang findet eine permanente Optimierung der Route und des besten Ziels von der aktuellen Ist-Position statt, das heißt beim Abweichen von der Route wird automatisch eine neue optimale Route zum besten Ziel bestimmt. Da bei diesem erneuten Bestimmen der Route wieder sämtliche Ziele Berücksichtigung finden, setzt sich das für diese aktuelle Ist-Position beste Ziel durch; hierbei muß das neue Ziel nicht dem zuvor genutzten Ziel entsprechen.

Da bei der sogenannten "MultiDestination-RoutenSuche" sämtliche in Frage kommenden Ziele berücksichtigt werden, liegt immer die optimale Route zum optimalen Ziel vor. Es kann somit zu jedem Zeitpunkt die entsprechende Entfernung zum aktuellen Ziel sowie die verbleibende Fahrzeit oder auch die geschätzte Ankunftszeit angegeben werden. Unabhängig hiervon oder in Verbindung hiermit kann eine Kombination mit verschiedenen Routenkriterien erfolgen; so läßt sich das Verfahren gemäß der vorliegenden Erfindung unter Berücksichtigung verschiedenster Optimierungskriterien, wie etwa "kurze Route" oder "schnelle Route", anwenden. Neben den Optimierungskriterien läßt sich das Verfahren auch mit verschiedenen Netzmanipulationen, wie etwa Telematik oder manuellen Sperrungen, kombinieren.

Auch ist darauf hinzuweisen, daß sich das vorliegende Verfahren der sogenannten "MultiDestination-Routen-Suche" ohne weiteres in Zwischenziel- oder sogenannte "ViaArea"-Routensuchverfahren integrieren läßt, so daß die spezifischen Eigenschaften dieser Zwischenziel- oder "ViaArea"-Routensuchverfahren genutzt werden können; so ist in diesem Zusammenhang beispielsweise die vollständige Beschreibung der Route zum eigentlichen Ziel über die "ViaArea" zu nennen.

Des weiteren können gemäß der vorliegenden Erfindung sogenannte Tetematik-Service-Provider dynamisch Ziele einprägen, um beispielsweise den Verkehrsfluß zu lenken. Hierbei bleibt das Navigationssystem im Fortbewegungsmittel völlig autonom und kann auf das Abweichen des Führers des Fortbewegungsmittels von der Route autark und schnell reagieren. Im Gegensatz hierzu können derartig schnelle Reaktionszeiten bei Verfahren, bei denen ein Telematik-Service-Provider die Routenberechnung vollständig übernimmt und den Routenverlauf in das Fortbewegungsmittel herunterlädt, nicht erreicht werden.

Die vorliegende Erfindung betrifft schließlich die Verwendung des vorstehend dargelegten Verfahrens in einem Foribewegungsmittel, insbesondere in einem Navigationssystem eines Fortbewegungsmittels.

Alternativ oder in Ergänzung hierzu kann das vorstehend dargelegte Verfahren auch in einer insbesondere softwarebasierten Routensuch-Applikation einer elektronischen Datenverarbeitungsanlage, insbesondere eines Personal Computers (PC) als PC-Tool, zum Einsatz gelangen; hierdurch wird der Anwender der elektronischen Datenverarbeitungsanlage beispielsweise in die Lage versetzt, vor Fahrtantritt die avisierte Route auf mindestens ein verkehrsbezogenes Ereignis, wie etwa auf mindestens eine Sperrung, auf mindestens einen Stau bzw. stockenden Verkehr und/ oder auf mindestens einen Verkehrsunfall, zu überprüfen; im Bedarfsfalle kann sich der Anwender der elektronischen Datenverarbeitungsanlage dann eine Alternativ- oder Ausweichroute bestimmen und anzeigen lassen.

Auch ist eine Verwendung des vorstehend dargelegten Verfahrens dahingehend möglich, daß ein Serviceprovider eine zweckmäßigerweise optimierte Route auf Anfrage eines Anwenders mittels einer elektronischen Datenverarbeitungsanlage berechnet und die dergestalt ermittelte Route per Datenfernübertragung in das Fortbewegungsmittel, insbesondere in das Kraftfahrzeug, des Anwenders übermittelt.

## Kurze Beschreibung der Zeichnungen

Weitere Ausgestaltungen, Merkmale und Vorteile der vorliegenden Erfindung werden nachstehend anhand des durch die Figuren 1 bis 15 veranschaulichten Ausführungsbeispiels näher erläutert.

Es zeigt:

Fig. 1    ein exemplarisches Routennetz, insbesondere ein reales Straßennetz, als ein Netzwerk von gerichteten Kanten und von zwischen den gerichteten Kanten angeordneten Knoten;

Fig. 2    eine exemplarische Optimierung der Kanten am Knoten;

Fig. 3    die beiden Teilziele A und B sowie deren jeweilige Entfernung vom Fortbewegungsmirtel im Beispielnetz gemäß Fig. 1;

Fig. 4    eine exemplarische Route des Fortbewegungsmittel zum Teilziel A;

Fig. 5    eine exemplarische Route des Fortbewegungsmittel zum Teilziel B;

Fig. 6    den Vorgang des Erzeugens der sogenannten "MultiDest-Liste" aus den einzelnen Zielen;

Fig. 7    den Vorgang des Erzeugens der sogenannten "MultiDest-Liste" aus einer Sonderzielliste;

Fig. 8    den allgemeinen Ablauf der sogenannten "MultiDestination-RoutenSuche";

Fig. 9    den Ablauf der sogenannten "MuhiDestination-RoutenSuche" in detaillierterer Form (mit Querbezügen zu Fig. 8);

Fig. 10   den Vorgang des Optimierens der Route anhand der Optimierungsbedingungen bzw. -regeln;

Fig. 11   den Zusammenhang zwischen der sogenannten "MultiDest-Indexliste" und der sogenannten "MultiDest-Beschreibungsliste";

Fig. 12   den ersten Optimierungsschritt anhand des Beispielnetzes gemäß Fig. 1;

Fig. 13   die Route des Fortbewegungsmittels von der aktuellen Position zum optimalen Teilziel B im Beispielnetz gemäß Fig. 1;

Fig. 14   die Route des Fortbewegungsmittels von der aktuellen Position zum optimalen Teilziel A im Beispielnetz gemäß Fig. 1; und

Fig. 15   in schematischer Prinzipdarstellung ein Ausführungsbeispiel eines Navigationssystems gemäß der vorliegenden Erfindung.

Gleiche oder ähnliche Ausgestaltungen, Elemente oder Merkmale sind in den Figuren 1 bis 15 mit identischen Bezugszeichen versehen.

## Bester Weg zur Ausführung der Erfindung

Im vorliegenden Ausfuhrungsbeispiel eines Verfahrens zum Ermitteln von Routen wird das Routennetz gemäß Figur 1 eingesetzt, wobei für dieses Routennetz angenommen wird, daß die Kanten k1, k3, k4, k6 sowie k9 jeweils den Widerstandswert 10 und die Kanten k2, k5, k7 sowie k8 jeweils den Widerstandswert 20 aufweisen. Das Fahrzeug befindet sich zum Betrachtungszeitpunkt auf der Kante +k8 (das "+"-Zeichen symbolisiert, daß die Fahrtrichtung der Vorzugsrichtung entspricht). Die unabhängigen, aber gleichberechtigten Teilziele stellen die Kante k1 für das Teilziel A und die Kante k4 für das Teilziel B dar.

Nach Definieren der beiden Teilziele A und B (vgl. Verfahrensschritt (R.2) in den Figuren 8 und 9) ergibt sich die folgende sogenannte "MultiDest-indexliste" (vgl. Figur 11 links oben):

| MultiDest-Index | Status / Beschreibung |
|---|---|
| 1 | / Teilziel A |
| 2 | / Teilziel B |

Des weiteren ergibt sich nach Definieren der beiden Teilziele A und B die folgende sogenannte "MultiDest-Beschreibungsliste" (vgl. Figur 11 rechts unten):

| MultiDest-Index | Kante |
|---|---|
| 1 | +k1 |
| 1 | -k1 |
| 2 | +k4 |
| 2 | -k4 |

Der Vorgang der eigentlichen sogenannten "MultiDestination-RoutenSuche" beginnt mit dem Initialisieren der Routentabelle (vgl. Verfahrensschritt (R.3.1) in Figur 9); hierbei wird für jeden Eintrag der Widerstand auf "unendlich" ($\infty$) gesetzt und die Nachfolgerkante (= "Nachfolger") auf "undefiniert" (-) gesetzt, das heißt der Nachfolger gelöscht, so daß sich die folgende grundinitialisierte Routentabelle ergibt:

| Kante | +Widerstand | +Nachfolger | -Widerstand | -Nachfolger |
|---|---|---|---|---|
| k1 | $\infty$ | - | $\infty$ | - |
| k2 | $\infty$ | - | $\infty$ | - |
| k3 | $\infty$ | - | $\infty$ | - |
| k4 | $\infty$ | - | $\infty$ | - |
| k5 | $\infty$ | - | $\infty$ | - |
| k6 | $\infty$ | - | $\infty$ | - |
| k7 | $\infty$ | - | $\infty$ | - |
| k8 | $\infty$ | - | $\infty$ | - |
| k9 | $\infty$ | - | $\infty$ | - |

In einem nächsten Verfahrensschritt (vgl. Verfahrensschritt (R.3.2) in Figur 9) erfolgt das Initialisieren der durch die sogenannte "MultiDest-Beschreibungsliste" beschriebenen Kanten der Teilziele A und B, das heißt der als Ziel in Frage kommenden Kanten. Hierbei werden die Routentabelleneinträge der in der sogenannten "MultiDest-Beschreibungsliste" verzeichneten Kanten als Ziel initialisiert; hierzu wird der Widerstand auf "Null" gesetzt und der Nachfolger als "Ziel" gekennzeichnet; ferner werden die Kanten in die Liste der im nächsten Verfahrensschritt zu optimierenden Kanten eingetragen, so daß sich die folgende Routentabelle ergibt:

| Kante | +Widerstand | +Nachfolger | -Widerstand | -Nachfolger |
|---|---|---|---|---|
| k1 | 0 | Ziel | 0 | Ziel |
| k2 | $\infty$ | - | $\infty$ | - |
| k3 | $\infty$ | - | $\infty$ | - |
| k4 | 0 | Ziel | 0 | Ziel |
| k5 | $\infty$ | - | $\infty$ | - |
| k6 | $\infty$ | - | $\infty$ | - |
| k7 | $\infty$ | - | $\infty$ | - |
| k8 | $\infty$ | - | $\infty$ | - |
| k9 | $\infty$ | - | $\infty$ | - |

Dementsprechend erhält die erste Liste zum Speichern der bereits optimierten Kanten die folgende Form:

$$+k1 \qquad -k1 \qquad +k4 \qquad -k4$$

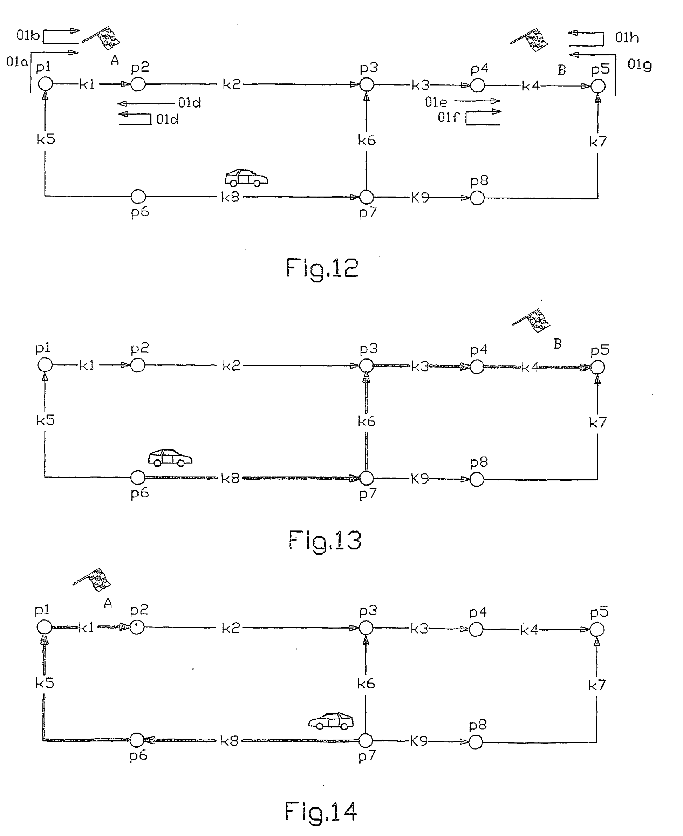

Beim sich daran anschließenden Verfahrensschritt des Optimierens der dem aktuellen Abschnitt zugeordneten Kanten des Graphen gelangen die in den Figuren 8 und 9 unter dem Verfahrensschritt (R.4) dargelegten Optimierungsbedingungen zur Anwendung, wobei für den ersten Optimierungsschritt (vgl. Figur 12) die folgende erste Liste zum Speichern der bereits optimierten Kanten zugrunde liegt (vgl. Verfahrensschritt (B.6) in Figur 9):

$$+k1 \qquad -k1 \qquad +k4 \qquad -k4$$

Dementsprechend lautet die zweite Liste zum Speichern der im nächsten Verfahrensschritt zu prüfenden Kanten:

Der erste Optimierungsschritt (vgl. Figur 12) soll anhand der Optimierung O1a beispielhaft dargestellt werden. Für die Ankommerkante +k5 (vgl. Verfahrensschritt (B.8) in Figur 9) ergibt sich aus dem Streckenwert dieser Kante aus dem Routentabelleneintrag der Istkante (vgl. Verfahrensschritt (B.7) in Figur 9) der folgende neue Widerstandswert (vgl. Figur 10):

$$R_{RT(Neu),Ank(+k5)} = R_{Kante,Ank(+k5)} + R_{RT,Ist(+k1)}$$

$$R_{RT(Neu),Ank(+k5)} = \qquad 20 \qquad + \qquad 0$$

$$R_{RT(Neu),Ank(+k5)} = \qquad 20$$

Der neue Widerstandswert der Ankommerkante +k5 wird entsprechend der in bezug auf Figur 10 dargelegten Optimierungsbedingung (R.4.2) mit dem alten Widerstandswert dieser Ankommerkante +k5 verglichen:

$$R_{RT(Neu),Ank(+k5)} < R_{RT(Alt),Ank(+k5)}$$
$$20 \qquad < \qquad \infty$$

Mithin ist die Optimierungsbedingung erfüllt, so daß die Ankommerkante +k5 optimiert werden muß. Dazu wird der neue Widerstandswert und der Nachfolger (istkante) in die Routentabelle eingetragen (vgl. Verfahrensschritt (R.4.3) in Figur 10).

Für die weiteren Optimierungen O1b bis O1h (vgl. Verfahrensschritte (B.10) und (B.11) in Figur 9) gilt eine analoge Vorgehensweise, so daß die Routentabelle nach Abschluß des ersten Optimierungsschritts das folgende Bild ergibt:

| Kante | +Widerstand | +Nachfolger | -Widerstand | -Nachfolger |
|-------|-------------|-------------|-------------|-------------|
| k1 | 0 | Ziel | 0 | Ziel |
| k2 | ∞ | - | 20 | -k1 |
| k3 | 10 | +k4 | ∞ | - |
| k4 | 0 | Ziel | 0 | Ziel |
| k5 | 20 | +k1 | ∞ | - |

(fortgesetzt)

| Kante | +Widerstand | +Nachfolger | -Widerstand | -Nachfolger |
|---|---|---|---|---|
| k6 | ∞ | - | ∞ | - |
| k7 | 20 | -k4 | ∞ | - |
| k8 | ∞ | - | ∞ | - |
| k9 | ∞ | - | ∞ | - |

Zum Abschluß des ersten Optimierungsschritts liegt die folgende erste Liste zum Speichern der bereits optimierten Kanten vor:

Dementsprechend lautet die zweite Liste zum Speichern der im nächsten Verfahrensschritt zu prüfenden Kanten:

$$+k5 \qquad -k2 \qquad +k3 \qquad +k7$$

Wenn also sämtliche Optimierungsbeziehungen bzw. -regeln abgearbeitet sind, ist die erste Liste zum Speichern der bereits optimierten Kanten leer (vgl. Verfahrensschritt (B.6) in Figur 9), und in der zweiten Liste zum Speichern der im nächsten Verfahrensschritt zu prüfenden Kanten befinden sich die in diesem Verfahrensschritt optimierten Kanten. Diese Kanten dienen im nächsten Verfahrensschritt als Ausgangsbasis für die dann folgende Optimierung (vgl. Verfahrensschritt (B.12) in Figur 9).

Ausgehend von den Ergebnissen dieser ersten Optimierungswelle erfolgen einige weitere Optimierungsschritte, nach deren Abschluß es keine Istkante-Ankommerkante-Beziehung gibt, für die sich eine erfolgreiche Optimierung ergibt, so daß die zweite Liste zum Speichern der im nächsten Verfahrensschritt zu prüfenden Kanten leer bleibt; an dieser Stelle sind die optimalen Wege von jeder Kante zum bestmöglichen Ziel beschrieben, so daß sich nach vollständiger Optimierung des Berechnungsgebiets die folgende Routentabelle ergibt:

| Kante | +Widerstand | +Nachfolger | -Widerstand | -Nachfolger |
|---|---|---|---|---|
| k1 | 0 | Ziel | 0 | Ziel |
| k2 | 40 | -k2 | 20 | -k1 |
| k3 | 10 | +k4 | 20 | +k3 |
| k4 | 0 | Ziel | 0 | Ziel |
| k5 | 20 | +k1 | 40 | +k5 |
| k6 | 20 | +k3 | 30 | +k6 |
| k7 | 20 | -k4 | 40 | +k7 |
| k8 | 40 | +k6 | 40 | +k5 |
| k9 | 30 | +k7 | 30 | +k6 |

Beim sich nunmehr anschließenden Verfahrensschritt des Zusammenstellens der Routenliste (vgl. Verfahrensschritt (R.5) in Figur 10) wird nach dem vollständigen Optimieren die Routenliste aus der Routentabelle erzeugt. Ausgehend von der Kante +k8 der aktuellen Fahrzeugposition werden die Kanten entsprechend den Nachfolgerverweisen in der Routentabelle in die Routenliste geschrieben:

| Nummer | Kante | +Widerstand zum Ziel | Nachfolger zum Ziel |
|---|---|---|---|
| 1 | +k8 | 40 | +k6 |
| 2 | +k6 | 30 | +k3 |
| 3 | +k3 | 20 | +k4 |
| 4 | +k4 | 0 | |

Hierbei läßt sich das aktuelle Teilziel mithilfe der letzten Kante in dieser Routenliste über die sogenannte "MultiDest-Beschreibungsliste" (vgl. Figur 11 rechts unten) bestimmen (im vorliegenden Falle ist es mit der Kante +k4 das Teilziel mit dem MultiDest-Index 2, wobei sich anhand der sogenannten "MultiDest-Indexliste" mit diesem MultiDest-Index weitere Informationen, wie etwa die Beschreibung oder der Name, ermitteln lassen), so daß sich im Ergebnis durch Verwendung einer konventionellen Routensuche das gefundene Teilziel B fixieren läßt (vgl. Figur 13 zur entsprechenden Route von der aktuellen Position +k8 zum optimalen Teilziel B).

Geschieht dieses Fixieren des optimalen Teilziels B nicht, so bleiben die weiteren Teilziele aktiv, so daß sich durch externe Einflüsse auf das Routennetz, wie etwa Telematik, oder durch Abweichen von der optimalen Route ein anderer optimaler Weg zu einem besseren Teilziel ergibt. In diesem Falle ergibt sich mit dem Abweichen von +k8 auf -k8 die folgende Routenliste, wobei die entsprechende Route von der aktuellen Position - k8 zum optimalen Teilziel A in Figur 14 dargestellt ist:

| Nummer | Kante | +Widerstand zum Ziel | Nachfolger zum Ziel |
|--------|-------|----------------------|---------------------|
| 1 | -k8 | 40 | +k5 |
| 2 | +k5 | 20 | +k1 |
| 3 | +k1 | 0 | |

Zusammenfassend kann mithin festgestellt werden, daß sich mittels der vorliegenden Erfindung die optimale Route von der aktuellen Ist-Position zum besten Ziel bestimmen läßt. Das im Rahmen der vorliegenden Erfindung vorgestellte Verfahren läßt sich in diesem Zusammenhang sehr gut nachweisen, denn es gibt eine wesentliche und notwendige Bedingung, die beim Einsatz des hier beschriebenen Verfahrens erfüllt sein muß.

Des weiteren sind mehrere voneinander unabhängige, nicht zusammenhängende, aber gleichberechtigte Ziele zu definieren, wobei vor der Bestimmung der Route das eingesetzte, optimal zu erreichende Teilziel noch nicht feststeht. Hierbei können die eingesetzten Teilziele sich aus freien Zielen zusammensetzen oder aus einer Liste einer Kategorie, insbesondere einer Sonderzielkategorie, des Index entstammen.

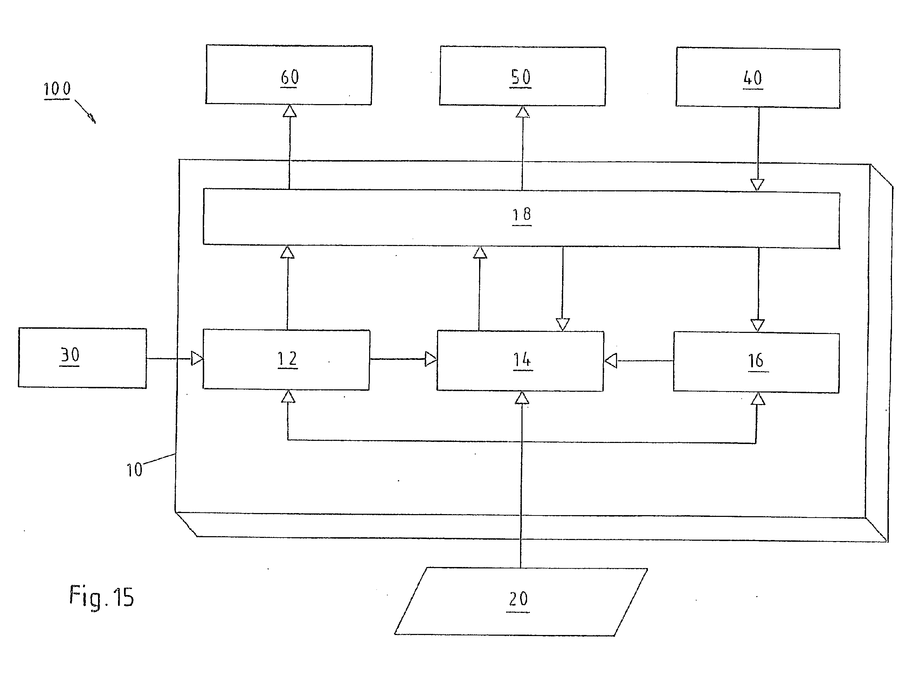

In bezug auf die vorliegende Erfindung wird der Fachmann insbesondere zu schätzen wissen, daß das vorliegende Ausführungsbeispiel zum Einsatz in einem anhand Figur 15 veranschaulichten Navigationssystem 100 eines Kraftfahrzeugs vorgesehen ist und hierzu eine Recheneinheit 10 zum Durchführen des vorstehend dargelegten Verfahrens aufweist. Dieser Recheneinheit 10 ist eine in Form eines Massendatenspeichers (digitale Karte) ausgebildete Speichereinheit 20 zum Abbilden des Straßennetzes als gerichtete Kanten k und zwischen den gerichteten Kanten k angeordnete Knoten p zugeordnet; des weiteren ist der Recheneinheit 10 eine Sensoreinheit 30 zum Aufnehmen der aktuellen Position des Kraftfahrzeugs zugeordnet.

Zum Orten der aktuellen Position des Fahrzeugs weist die Recheneinheit 10 eine mit der Sensoreinheit 30 in Verbindung stehende Ortungseinheit 12 auf; zum Bestimmen derjenigen Route mit der minimalen Widerstandssumme weist die Recheneinheit 10 eine mit der Ortungseinheit 12 und mit der Speichereinheit 20 in Verbindung stehende Routensucheinheit 14 auf.

Des weiteren zeichnet sich das Navigationssystem 100 dadurch aus, daß die Recheneinheit 10 eine mit der Routensucheinheit 14 und mit der Speichereinheit 20 in Verbindung stehende Indexeinheit 16 zum Definieren und zum Spezifizieren verschiedener Zielpunkte aus verschiedenen Einträgen

- mehrerer Indices gegebener Adressen, Kartenziele, Zielspeichereinträge oder dergleichen und
- mehrerer Indices jeweils einer gegebenen Kategorie, nämlich jeweils einer gegebenen Sonderzielkategorie, wie etwa Postämter, Tankstellen oder dergleichen,

aufweist.

Über eine mit der Ortungseinheit 12, mit der Routensucheinheit 14 und mit der Indexeinheit 16 in Verbindung stehende Schnittstelleneinheit 18 steht die Recheneinheit 10 mit einer Eingabeeinheit 40 zum Eingeben der vorstehend dargelegten verschisdenen Zielpunkte in Verbindung. Hierbei ist die Eingabeeinheit 40 in erfindungswesentlicher Weise sowohl für benutzerdefinierte manuelle Eingaben als auch für automatische Eingaben ausgelegt sein, wobei die automatischen Eingaben auf dem automatischen Feststellen der aktuellen Fahrzeugposition beruhen. Exemplarisch kann etwa mit dem angesichts der aktuellen Tankfüllung noch verfügbaren Restweg gearbeitet werden, so daß sich die Routensuche in diesem Falle auf das - manuell bestimmbare oder automatisch erfolgende - Ermitteln von in Frage kommenden Tankstellen als potentielle Zielpunkte bezieht.

Gemäß der Lehre der vorliegenden Erfindung kann die Routensuche auch als mindestens eine sogenannte "MultiDestination-RoutenSuche" ("MultiDest-RS") ausgelegt sein kann; im dargelegten Falle der Tankstellen als potentielle Zielpunkte werden dann bei der "MultiDestination-R(outen)S(uche)" mehrere mögliche Routen vom Ausgangspunkt (= aktuelle Fahrzeugposition) zu einer Mehr- oder Vielzahl von möglichen, räumlich getrennten Zielpunkte (= mit der aktuellen Tankfüllung noch erreichbare Tankstellen) berechnet.

Des weiteren ist der Recheneinheit 10 eine mit der Schnifitstelleneinheit 18 in Verbindung stehende Anzeige- oder Displayeinheit 50 zum optischen Darstellen der berechneten Route sowie eine mit der Schnittstelleneinheit 18 in Verbindung stehende Lautsprechereinheit 60 zum akustischen Darstellen der berechneten Route zugeordnet.

**Patentansprüche**

1. Verfahren zum Ermitteln von Routen in einem als gerichtete Kanten (k) und zwischen den gerichteten Kanten (k) angeordnete Knoten (p) in einer Speichereinheit abgebildeten Routennetz, insbesondere Straßennetz,

   - wobei die zu ermittelnde Route als eine Abfolge oder Reihe von gerichteten Kanten (k) mit jeweils zwischen den gerichteten Kanten (k) angeordneten Knoten (p) bestimmt wird und

   wobei jeder gerichteten Kante (k) und/oder jedem Knoten (p) ein bestimmter Widerstand zugeordnet wird,
   **dadurch gekennzeichnet,**
   **dass** jeweils eine Route von einem Ausgangspunkt zu einem optimalen Zielpunkt aus einer Mehr- oder Vielzahl von räumlich getrennten, jeweils mindestens einer gerichteten Kante (k) und/oder mindestens einem Knoten (p) zugeordneten Zielpunkten berechnet wird, wobei das Verfahren die folgenden Schritte aufweist:

   (A) Definieren, insbesondere Spezifizieren, der verschiedenen Zielpunkte, insbesondere aus verschiedenen Einträgen

   - mindestens eines Index gegebener Adressen, Kartenziele, Zielspeichereinträge oder dergleichen und/oder
   - mindestens eines Index mindestens einer gegebenen Kategorie, insbesondere mindestens einer gegebenen Sonderzielkategorie, wie etwa Postämter, Tankstellen oder dergleichen;

   (B) Optimieren der jeweiligen Route zu einem jeden der verschiedenen Zielpunkte als Abfolge oder Reihe von gerichteten Kanten (k) mit jeweils zwischen den gerichteten Kanten (k) angeordneten Knoten (p) mittels eines schrittweise rückwärts iterierenden Routensuchalgorithmus, wobei in jedem Iterationsschritt eine Route zu jedem der verschiedenen Zielpunkte optimiert wird, dergestalt, dass die jeweilige, durch die Summe aller Widerstände der Abfolge oder Reihe zum jeweiligen Zielpunkt gegebene Widerstandssumme minimal wird;
   (C) Zusammenstellen der Liste von jeweiligen Routen zum jeweiligen Zielpunkt.

2. Verfahren gemäß Anspruch 1, **dadurch gekennzeichnet, dass** auf den Verfahrensschritt (C) des Zusammenstellens der Liste von jeweiligen Routen zum jeweiligen Zielpunkt ein Verfahrensschritt (D) des Anzeigens derjenigen Route mit der minimalen Widerstandssumme folgt.

3. Verfahren gemäß mindestens einem der Ansprüche 1 bis 2, **dadurch gekennzeichnet, daß** der Verfahrensschritt (A) des Definierens, insbesondere des Spezifizierens, der verschiedenen Zielpunkte aus verschiedenen Einträgen mindestens eines Index gegebener Adressen, Kartenziele, Zielspeichereinträge oder dergleichen die folgenden einzelnen Schritte aufweist:

   (A.1) Starten;
   (A.2) Initialisieren der sogenannten "MultiDest-Liste;
   (A.3) Auswählen eines bestimmten Ziels, wie etwa Adresse, Kartenziel, Zielspeichereintrag oder dergleichen;
   (A.4) Kopieren der Beschreibung dieses Ziels in die sogenannte "MultiDest-Liste" (im Graphen);
   (A.5) Hinzufügen mindestens eines weiteren Ziels:

   - wenn mindestens ein weiteres Ziel hinzugefügt (+), dann Gehen vor Schritt (A.3);
   - wenn kein weiteres Ziel hinzugefügt (-), dann Gehen zu Schritt (A.6);

   (A.6) Beenden des Verfahrensschritts (A).

4. Verfahren gemäß mindestens einem der Ansprüche 1 bis 3, **dadurch gekennzeichnet, daß** der Verfahrensschritt (A) des Definierens, insbesondere des Spezifizierens, der verschiedenen Zielpunkte aus verschiedenen Einträgen mindestens eines Index mindestens einer gegebenen Kategorie, insbesondere mindestens einer gegebenen Sonderzielkategorie, wie etwa Postämter, Tankstellen oder dergleichen, die folgenden einzelnen Schritte aufweist:

   (A.11) Starten;

(A.12) Auswählen der Kategorie, insbesondere der Sonderzielkategorie;
(A.13) Übernehmen der Liste als sogenannte "MultiDest-Liste":

- wenn Liste als sogenannte "MultiDest-Liste" übernommen (+), dann Gehen zu Schritt (A.14): Initialisieren der sogenannten "MultiDest-Liste";
- wenn Liste nicht als sog. "MultiDest-Liste" übernommen (-), dann Gehen zu Schritt (A.17): Auswählen eines bestimmten Ziels;

(A.15) Kopieren der Zielbeschreibung in die sogenannte "MultiDest-Liste" (im Graphen);
(A.16) Abarbeiten sämtlicher Ziele oder einer bestimmten Anzahl von Zielen: wenn sämtliche Ziele oder die bestimmte Anzahl von Zielen abgearbeitet (+), dann Gehen zu Schritt (A.18);

- wenn noch nicht sämtliche Ziele oder noch nicht die bestimmte Anzahl von Zielen abgearbeitet (-), dann Gehen vor Schritt (A.15);

(A.18) Beenden des Verfahrensschritts (A).

**5.** Verfahren gemäß mindestens einem der Ansprüche 1 bis 4, **dadurch gekennzeichnet, daß** beim Verfahrensschritt (A) die verschiedenen Zielpunkte

- mittels benutzerdefinierten manuellen Eingebens und/oder
- mittels automatischen Eingebens

aus den verschiedenen Einträgen mindestens eines Index gegebener Adressen, Kartenziele, Zielspeichereinträge oder dergleichen definiert, insbesondere spezifiziert, werden.

**6.** Verfahren gemäß Anspruch 5, **dadurch gekennzeichnet, daß** beim automatischen Eingeben der jeweilige aktuelle Standort des Fortbewegungsmittels automatisch festgestellt wird.

**7.** Verfahren gemäß mindestens einem der Ansprüche 1 bis 6, **dadurch gekennzeichnet, daß** die jeweilige Route iterativ ausgehend von der dem jeweiligen Zielpunkt zugeordneten Kante (k) berechnet wird.

**8.** Verfahren gemäß mindestens einem der Ansprüche 1 bis 7, **dadurch gekennzeichnet, daß** der Verfahrensschritt (B) des Optimierens der jeweiligen Route zum jeweiligen Zielpunkt die folgenden einzelnen Schritte aufweist:

(B.1) Erstellen einer Routentabelle, in der für jede gerichtete Kante (k) sowohl in Vorwärtsrichtung (+) als auch in Rückwärtsrichtung (-) jeweils ein Widerstandswert sowie jeweils eine Nachfolgerkante (k) eintragbar ist;
(B.2) Setzen aller Widerstandswerte der Routentabelle auf unendlich (∞) und Löschen aller Nachfolgerkanten (k);
(B.3) Setzen des jeweiligen Widerstandswerts der den jeweiligen Zielpunkten zugeordneten Kanten (k) auf Null;
(B.4) Speichern der den jeweiligen Zielpunkten zugeordneten Kanten (k) in einer ersten Liste für bereits optimierte Kanten (k);
(B.5). Erstellen einer leeren zweiten Liste für im nächsten Schritt zu optimierende Kanten (k);
(B.6) Bestimmen, ob erste Liste leer:

- wenn erste Liste leer (+),

dann Beenden des Verfahrensschritts (B);
(B.7) Setzen einer Kante (k) aus der ersten Liste als Istkante;
(B.8) Bestimmen aller mit der Istkante vermaschten Kanten (k) als Ankommerkanten;
(B.9) Bestimmen für die jeweilige Ankommerkante, ob die Optimierungsbedingung, daß die Summe aus dem Streckenwiderstand(Ankommerkante) und dem Widerstand(Istkante) kleiner als der Widerstand(Ankommerkante) ist, erfüllt ist:

- wenn Optimierungsbedingung erfüllt (+), dann

-- Eintragen der jeweiligen Ankommerkante in die zweite Liste,
-- Setzen des Widerstandswerts der jeweiligen Ankommerkante in der Routentabelle auf die Summe aus dem Streckenwiderstand(Ankommerkante) und dem Widerstand(Istkante),
-- Eintragen der Istkante als Nachfolgerkante (k) der jeweiligen Ankommerkante;

- wenn Optimierungsbedingung nicht erfüllt (-), dann Verwerfen der Ankommerkante;

(B.10) Bestimmen, ob alle Ankommerkanten bearbeitet:

- wenn noch nicht alle Ankommerkanten bearbeitet (-), dann

-- Setzen einer anderen Kante (k) aus der ersten Liste als Istkante und
-- Gehen zu Schritt (B.8);

- wenn alle Ankommerkante bearbeitet (+), dann Gehen zu Schritt (B.11);

(B.11) Bestimmen, ob alle Kanten (k) aus erster Liste bearbeitet:

- wenn noch nicht alle Kanten (k) aus erster Liste bearbeitet (-), dann Gehen zu Schritt (B.7);
- wenn alle Kanten (k) aus erster Liste bearbeitet (+), dann Gehen zu Schritt (B.12);

(B.12) Vertauschen der ersten Liste mit der zweiten Liste,
Leeren der zweiten Liste und
Gehen zu Schritt (B.6).

9. Verfahren gemäß mindestens einem der Ansprüche 1 bis 8, **dadurch gekennzeichnet, daß** nach Ermitteln der Route vom Ausgangspunkt zum jeweiligen Zielpunkt

- dieser aktuelle Zielpunkt festgehalten und/oder fixiert wird und die anderen möglichen Zielpunkte verworfen werden; oder
- dieser aktuelle Zielpunkt verworfen und eine Route zu einem der anderen möglichen Zielpunkte bestimmt wird; oder
- sämtliche Zielpunkte als aktiv belassen werden, so daß sich beim Abweichen von der berechneten Route zu einem anderen Zielpunkt eine bessere Route ergibt.

10. Verfahren gemäß mindestens einem der Ansprüche 1 bis 9, **dadurch gekennzeichnet, daß** die berechnete Route auf mindestens eine Beeinflussung des Routennetzes durch mindestens eine benutzerdefinierte Manipulation und/oder durch Telematik, insbesondere durch mindestens ein verkehrsbezogenes Ereignis, wie etwa durch mindestens eine Sperrung, durch mindestens einen Stau bzw. stockenden Verkehr und/oder durch mindestens einen Verkehrsunfall, überprüft wird.

11. Verfahren gemäß mindestens einem der Ansprüche 1 bis 10, **dadurch gekennzeichnet, daß** die zusammengestellte Liste von jeweiligen Routen zum jeweiligen Zielpunkt mittels Verkehrstelematik direkt, etwa mittels GPRS (= General Packet Radio Service) und/oder mittels GSM (= Global System for Mobile Communication) und/oder mittels UMTS (= Universal Mobile Telecommunication System) oder von einem Serviceprovider online, in mindestens ein Navigationssystem (100) eingespielt wird.

12. Verwendung des Verfahrens gemäß mindestens einem der Ansprüche 1 bis 11

- in einem Fortbewegungsmittel, insbesondere in einem Navigationssystem eines Fortbewegungsmittels, und/ oder
- in einer insbesondere softwarebasierten Routensuch-Applikation einer elektronischen Datenverarbeitungsanlage, insbesondere eines Personal Computers (PC), und/oder
- in einer elektronischen Datenverarbeitungsanlage eines Serviceproviders.

13. Navigationssystem (100) für ein Fortbewegungsmittel; insbesondere für ein Kraftfahrzeug, aufweisend mindestens eine Recheneinheit (10) zum Durchführen des Verfahrens gemäß mindestens einem der Ansprüche 1 bis 11.

**Claims**

1. Method for ascertaining routes in a route network, particularly a road network, which is mapped as directional edges (k) and nodes (p) arranged between the directional edges (k) in a memory unit,

   - wherein the route to be ascertained is determined as a succession or series of directional edges (k) with respective nodes (p) arranged between the directional edges (k), and
   - wherein each directional edge (k) and/or each node (p) is allocated a particular resistance,

   **characterized**
   **in that** a respective route is calculated from a starting point to an optimum destination from a plurality or multiplicity of physically separate destinations which are respectively associated with at least one directional edge (k) and/or at least one node (p), wherein the method has the following steps:

   (A) define, particularly specify, the various destinations, particularly from various entries

   - for at least one index of given addresses, map destinations, destination memory entries or the like and/or
   - for at least one index of at least one given category, particularly at least one given special destination category, such as post offices, filling stations or the like;

   (B) optimize the respective route to each of the various destinations as a succession or series of directional edges (k) with respective nodes (p) arranged between the directional edges (k) using a route search algorithm which involves step-by-step backward iteration, wherein each iteration step involves a route to each of the various destinations being optimized such that the respective total resistance, given by the sum of all the resistances in the succession or series to the respective destination, is minimized;
   (C) compile the list of respective routes to the respective destination.

2. Method according to Claim 1, **characterized in that** method step (C) of compiling the list of respective routes to the respective destination is followed by a method step (D) of indicating that route with the minimum total resistance.

3. Method according to at least one of Claims 1 and 2, **characterized in that** method step (A) of defining, particularly specifying, the various destinations from various entries for at least one index of given addresses, map destinations, destination memory entries or the like has the following individual steps:

   (A.1) start;
   (A.2) initialize the so-called "MultiDest list";
   (A.3) select a particular destination, such as address, map destination, destination memory entry or the like;
   (A.4) copy the description of said destination to a so-called "MultiDest list" (in the graph);
   (A.5) add at least one further destination:

   - if at least one further destination added (+) then go to before step (A.3);
   - if no further destination added (-) then go to step (A.6);

   (A.6) terminate method step (A).

4. Method according to at least one of Claims 1 to 3, **characterized in that** method step (A) of defining, particularly specifying, the various destinations from various entries for at least one index of at least one given category, particularly at least one given special destination category, such as post offices, filling stations or the like, has the following individual steps:

   (A.11) start;
   (A.12) select the category, particularly the special destination category;
   (A.13) adopt the list as a so-called "MultiDest list":

   - if list adopted as so-called "MultiDest list" (+)
   then go to step (A.14);
   initialize the so-called "MultiDest list";
   - if list not adopted as so-called "MultiDest list" (-)

then go to step (A.17):
select a particular destination;

(A.15) copy the destination description to the so-called "MultiDest list" (in the graph);
(A.16) process all destinations or a particular number of destinations:

- if all destinations or the particular number of destinations processed (+) then go to step (A.18);
- if not all destinations or not the particular number of destinations processed yet (-) then go to before step (A.15);

(A.18) terminate method step (A).

5. Method according to at least one of Claims 1 to 4, **characterized in that** method step (A) involves the various destinations being defined, particularly specified,

- by means of user-defined manual input and/or
- by means of automatic input from the various entries for at least one index of given addresses, map destinations, map memory entries or the like.

6. Method according to Claim 5, **characterized in that** the automatic input involves the respective current location of the means of locomotion being determined automatically.

7. Method according to at least one of Claims 1 to 6, **characterized in that** the respective route is calculated iteratively starting from the edge (k) associated with the respective destination.

8. Method according to at least one of Claims 1 to 7, **characterized in that** method step (B) of optimizing the respective route to the respective destination has the following individual steps:

(B.1) create a route table in which a respective resistance value and a respective successor edge (k) can be entered for each directional edge (k) both in the forward direction (+) and in the backward direction (-);
(B.2) set all the resistance values in the route table to infinity ($\infty$) and erase all the successor edges (k);
(B.3) set the respective resistance value of the edges (k) associated with the respective destinations to zero;
(B.4) store the edges (k) associated with the respective destinations in a first list for already optimized edges (k);
(B.5) create an empty second list for edges (k) to be optimized in the next step;
(B.6) determine whether first list empty:

- if first list empty (+) then terminate method step (B);

(B.7) set one edge (k) from the first list as actual edge;
(B.8) determine all the edges (k) intermeshed with the actual edge as arrival edges;
(B.9) determine for the respective arrival edge whether the optimization condition that the sum of the section resistance (arrival edge) and the resistance (actual edge) is less than the resistance (arrival edge) is satisfied:

- if optimization condition is satisfied (+) then

-- enter the respective arrival edge into the second list,
-- set the resistance value of the respective arrival edge in the route table to the sum of the section resistance (arrival edge) and the resistance (actual edge),
-- enter the actual edge as a successor edge (k) for the respective arrival edge;

- if optimization condition not satisfied (-) then reject the arrival edge;

(B.10) determine whether all the arrival edges handled:

- if not all the arrival edges handled yet (-) then

-- set another edge (k) from the first list as the actual edge and
-- go to step (B.8);

- if all the arrival edges handled (+) then go to step (B.11);

(B.11) determine whether all the edges (k) from first list handled:

- if not all the edges (k) from first list handled yet (-)
then go to step (B.7);
- if all the edges (k) from first list handled (+)
then go to step (B.12);

(B.12) interchange the first list with the second list,
empty the second list and
go to step (B.6).

9. Method according to at least one of Claims 1 to 8, **characterized in that** when the route from the starting point to the respective destination has been ascertained,

- said current destination is held and/or fixed and the other possible destinations are rejected; or
- said current destination is rejected and a route to one of the other possible destinations is determined; or
- all destinations are left active, so that departing from the calculated route to another destination results in a better route.

10. Method according to at least one of Claims 1 to 9, **characterized in that** the calculated route is checked for at least one instance of the route network being influenced by at least one user-defined manipulation and/or by telematics, particularly by at least one traffic-related event, such as by at least one closure, by at least one tailback or slow-moving traffic and/or by at least one traffic accident.

11. Method according to at least one of Claims 1 to 10, **characterized in that** the compiled list of respective routes to the respective destination is loaded into at least one navigation system (100) by means of traffic telematics directly, for example by means of GPRS (General Packet Radio Service) and/or by means of GSM (Global System for Mobile Communication) and/or by means of UMTS (Universal Mobile Telecommunication System) or by a service provider online.

12. Use of the method according to at least one of Claims 1 to 11

- in a means of locomotion, particularly in a navigation system for a means of locomotion, and/or
- in a route search application, particularly a software-based one, in an electronic data processing installation, particularly in a personal computer (PC), and/or
- in an electronic data processing installation of a service provider.

13. Navigation system (100) for a means of locomotion, particularly for a motor vehicle, having at least one computation unit (10) for carrying out the method according to at least one of Claims 1 to 11.

**Revendications**

1. Procédé de détermination d'itinéraires dans un réseau d'itinéraires, en particulier un réseau routier, représenté dans une unité de mémoire sous la forme de segments orientés (k) et de noeuds (p) disposés entre les segments orientés (k),
l'itinéraire à déterminer étant déterminé en tant que succession ou série de segments orientés (k) et de noeuds (p) disposés entre les segments orientés (k),
une résistance définie étant associée à chaque segment orienté (k) et/ou à chaque noeud (p),
**caractérisé en ce que**
chaque itinéraire partant d'un point initial pour aboutir à un point de destination optimal est calculé à partir de plusieurs points de destination séparés spatialement et associés chacun à au moins un segment orienté (k) et/ou à au moins un noeud (p),
le procédé présentant les étapes suivantes :

(A) définir et en particulier spécifier les différentes destinations, en particulier à partir de différentes entrées d'au moins un index d'adresses données, de destinations sur une carte, d'entrées dans une mémoire de destinations ou similaires et/ou d'au moins un index d'au moins une catégorie donnée, en particulier d'au moins une catégorie donnée de destinations spéciales, par exemple des bureaux de poste, des stations-service ou similaires,

(B) au moyen d'un algorithme de recherche d'itinéraire à itération pas à pas vers l'arrière, optimiser chaque itinéraire jusqu'à chacune des différentes destinations, sous la forme de successions ou de séries de segments orientés (k) et de noeuds (p) disposés entre les segments orientés (k), un itinéraire vers chacune des différentes destinations étant optimisé dans chaque étape d'itération en minimisant la somme des résistances définie comme somme de toutes les résistances de la succession ou de la série conduisant à chaque destination et

(C) établir la liste des différents itinéraires vers chaque destination.

2.  Procédé selon la revendication 1, **caractérisé en ce que** l'étape de procédé (C) qui consiste à établir la liste des différents itinéraires vers chaque destination est suivie par une étape de procédé (D) qui consiste à afficher l'itinéraire qui présente la somme de résistances minimale.

3.  Procédé selon au moins l'une des revendications 1 ou 2, **caractérisé en ce que** l'étape (A) de procédé qui consiste à définir et en particulier à spécifier les différentes destinations à partir de différentes entrées d'au moins un index d'adresses données, de destinations sur une carte, d'entrées dans une mémoire de destinations ou similaires présente les différentes étapes suivantes :

    (A.1) lancer l'étape,
    (A.2) initialiser la liste appelée "MultiDest-Liste",
    (A.3) sélectionner une destination définie, par exemple une adresse, une destination sur une carte, une entrée dans une mémoire de destinations ou similaires,
    (A.4) copier la description de cette destination dans la liste appelée "MultiDest-Liste" (en graphique),
    (A.5) ajouter au moins une autre destination et:

        - si au moins une autre destination est ajoutée (+), retourner avant l'étape (A.3),
        - si aucune autre destination n'est ajoutée (-), passer à l'étape (A.6),

    (A.6) fin de l'étape (A) du procédé.

4.  Procédé selon au moins l'une des revendications 1 à 3, **caractérisé en ce que** l'étape (A) du procédé, qui consiste à définir et en particulier à spécifier les différentes destinations à partir de différentes entrées d'au moins un index d'au moins une catégorie donnée, en particulier d'au moins une catégorie donnée de destinations spéciales, par exemple des bureaux de poste, des stations-service ou similaires, présente les différentes étapes ci-dessous :

    (A.11) lancer l'étape,
    (A.12) sélectionner la catégorie et en particulier la catégorie de destinations spéciales,
    (A.13) reprendre la liste comme étant la liste dite "MultiDest-Liste" :

        - si la liste est reprise (+) comme liste dite "MultiDest-Liste", passer à l'étape (A.14), initialiser la liste dite "MultiDest-Liste",
        - si la liste n'est pas reprise comme liste dite "MultiDest-Liste" (-), passer à l'étape (A.17), sélectionner une destination définie,

    (A.15) copier la description de cible dans la liste dite "MultiDest-Liste" (en graphique),
    (A.16) traiter toutes les destinations ou un nombre défini de destinations :

        - si toutes les destinations ou le nombre défini de destinations ont été traités (+), passer à l'étape (A.18),
        - si toutes les destinations ou le nombre défini de destinations n'ont pas encore été traités (-), retourner à avant l'étape (A.15) et

    (A.18) terminer l'étape (A) du procédé.

5.  Procédé selon au moins l'une des revendications 1 à 4, **caractérisé en ce que** dans l'étape de procédé (A), les différentes destinations sont définies et en particulier spécifiées :

- au moyen d'introductions manuelles définies par l'utilisateur et/ou
- au moyen d'une introduction automatique,

à partir des différentes entrées d'au moins un index d'adresses données, de destinations sur une carte, d'entrées dans la mémoire de destinations ou similaires.

6. Procédé selon la revendication 5, **caractérisé en ce qu'**en cas d'introduction automatique, la position en cours du moyen de déplacement est constatée automatiquement.

7. Procédé selon au moins l'une des revendications 1 à 6, **caractérisé en ce que** chaque itinéraire est calculé de manière itérative en partant du segment (k) associé à chaque destination.

8. Procédé selon au moins l'une des revendications 1 à 7, **caractérisé en ce que** l'étape de traitement (B) qui consiste à optimiser chaque itinéraire vers chaque destination présente les différentes étapes ci-dessous :

(B.1) établir un tableau d'itinéraires dans lequel une valeur de résistance ainsi que le segment suivant (k) peuvent être introduits pour chaque segment orienté (k), tant dans la direction avant, (+) que dans la direction arrière (-),
(B.2) régler toutes les valeurs de résistance du tableau d'itinéraires sur infini (∞) et effacer tous les segments (k) suivants,
(B.3) régler à zéro la valeur de la résistance des segments (k) associés aux destinations concernées,
(B.4) placer les segments (k) associés à chacune des destinations en mémoire dans une première liste des segments (k) déjà optimisés,
(B.5) établir une liste vide pour l'étape suivante d'optimisation des segments (k),
(B.6) vérifier si la première liste est vide

- si la première liste est vide (+), terminer l'étape de procédé (B),

(B.7) définir un segment (k) de la première liste comme segment en cours,
(B.8) définir tous les segments (k) maillés avec le segment en cours en tant que segments d'arrivée,
(B.9) pour chaque segment d'arrivée, vérifier si la condition d'optimisation est satisfaite, à savoir que la somme de la résistance des parcours (segment d'arrivée) et de la résistance (segment en cours) est inférieure à la résistance (segment d'arrivée), :

- si la condition d'optimisation est satisfaite (+),
- introduire le segment d'arrivée concerné dans la deuxième liste,
- définir la valeur de résistance du segment d'arrivée concerné dans le tableau d'itinéraires comme somme de la résistance de parcours (segment d'arrivée) et de la résistance (segment en cours) et
- introduire le segment en cours comme segment (k) qui suit le segment d'arrivée concerné,
- si la condition d'optimisation n'est pas satisfaite (-),
- rejeter le segment d'arrivée,

(B.10) vérifier si tous les segments d'arrivée ont été traités :

- si tous les segments d'arrivée n'ont pas encore été traités (-),
- définir un autre segment (k) de la première liste comme segment en cours et
- passer à l'étape (B.8) et
- si tous les segments d'arrivée ont été traités (+), passer à l'étape (B.11),

(B.11) vérifier si tous les segments (k) de la première liste ont été traités,

- si tous les segments (k) de la première liste n'ont pas encore été traités (-), passer à l'étape (B.7) et
- si tous les segments (k) de la première liste ont été traités (+), passer à l'étape (B.12),

(B.12) remplacer la première liste par la deuxième liste, vider la deuxième liste et passer à l'étape (B.6).

9. Procédé selon au moins l'une des revendications 1 à 8, **caractérisé en ce qu'**après détermination de l'itinéraire entre le point de départ et chaque destination,

22

- cette destination en cours est maintenue et/ou définie et les autres destinations possibles sont rejetées ou
- cette destination en cours est rejetée et un itinéraire vers l'une des autres destinations possibles est déterminé ou
- toutes les destinations sont laissées actives de manière à obtenir un meilleur itinéraire en cas d'écart par rapport à l'itinéraire calculé vers une autre destination.

10. Procédé selon au moins l'une des revendications 1 à 9, **caractérisé en ce que** sur l'itinéraire calculé, on vérifie au moins un effet sur le réseau routier d'au moins une manipulation définie par l'utilisateur et/ou par télématique, en particulier d'au moins un événement concernant le trafic, par exemple au moins un barrage, au moins un embouteillage, un encombrement du trafic et/ou au moins un accident de circulation.

11. Procédé selon au moins l'une des revendications 1 à 10, **caractérisé en ce que** la liste établie pour les différents itinéraires vers chaque destination est injectée directement dans au moins un système de navigation (100), par exemple par GPRS (= "General Packet Radio Service"), par GSM (= Global System for Mobile Communication), par UMTS (= Universal Mobile Telecommunication System) et/ou par un fournisseur de services en ligne.

12. Utilisation du procédé selon au moins l'une des revendications 1 à 11

- dans un moyen de déplacement, en particulier dans le système de navigation d'un moyen de déplacement et/ou
- dans une application de recherche d'itinéraire, en particulier basée sur un logiciel, d'une installation électronique de traitement de données, en particulier d'un ordinateur personnel (PC) et/ou
- dans une installation électronique de traitement de données d'un fournisseur de services.

13. Système de navigation (100) pour moyens de déplacement, en particulier pour véhicule automobile, qui présente au moins une unité de calcul (10) destinée à exécuter le procédé selon au moins l'une des revendications 1 à 11.

Fig.1

Fig.2

Fig.3

Fig.4

Fig.5

Fig.6

(A.1)

(A.2)

(A.3)

(A.4)

(A.5)

(+)

(−)

(A.6)

Fig.7

(A.11)

(A.12)

(A.13)

(−)

(+)

(A.14)

(A.17)

(A.15)

(A.16)

(−)

(−)

(A.18)

Fig.8

Fig.9

Fig. 10

SD1
SD2
SD3

SD N-1
SD N

K1(SD1)
K2(SD1)

K1(SD2)
K2(SD2)
K3(SD2)

K1(SD3)
K2(SD3)

K1(SD N-1)
K2(SD N-1)
K3(SD N-1)

K1(SD N)
K2(SD N)
K3(SD N)
K4(SD N)

Fig.11

Fig.12

Fig.13

Fig.14

Fig.15

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0979987 A2
- DE 19928295